# EUROPÄISCHE PATENTSCHRIFT

(11) **EP 1 557 692 B1**
(45) Veröffentlichungstag und Bekanntmachung des Hinweises auf die Patenterteilung: **10.06.2009**
(21) Anmeldenummer: 05001244.2
(22) Anmeldetag: 21.01.2005
(51) Int. Cl.: G01S 17/93

(54) **Verfahren zur Erkennung von gekennzeichneten Gefahr- und/oder Baustellen im Bereich von Fahrbahnen**
Method for detecting marked hazardous locations and/or road works in the vicinity of roadways
Procédé de détection des emplacements dangereux et/ou des chantiers de construction marqués à proximité des routes

(30) Priorität: 26.01.2004 DE 102004003848
(43) Veröffentlichungstag der Anmeldung: 27.07.2005
(73) Patentinhaber: IBEO Automobile Sensor GmbH, 22179 Hamburg (DE)
(72) Erfinder: Kämpchen, Nico, 89081 Ulm (DE); Fürstenberg, Kay, 89075 Ulm (DE); Dietmayer, Klaus, Prof. Dr., 89075 Ulm (DE); Lages, Ulrich, Dr., 21031 Hamburg (DE)
(74) Vertreter: Manitz, Finsterwald & Partner GbR

(56) Entgegenhaltungen:
- WO-A-02/092375
- DE-A1- 19 743 255
- DE-A1- 19 904 097
- US-A1- 2001 052 844
- US-A1- 2002 032 515
- US-A1- 2002 067 292
- SPARBERT J ET AL: "Lane detection and street type classification using laser range images" INTELLIGENT TRANSPORTATION SYSTEMS, 2001. PROCEEDINGS. 2001 IEEE AUGUST 25-29, 2001, PISCATAWAY, NJ, USA,IEEE, 25. August 2001 (2001-08-25), Seiten 454-459, XP010555814 ISBN: 0-7803-7194-1

## Beschreibung

Die vorliegende Erfindung betrifft ein Verfahren zur Erkennung von gekennzeichneten Gefahr- und/oder Baustellen im Bereich von Fahrbahnen.

Straßen weisen häufig auch in einem guten Ausbauzustand Gefahrstellen auf, die von einem diese Straßen benutzenden Fahrzeugführer wenigstens eine erhöhte Aufmerksamkeit und häufig auch eine Reduktion der Geschwindigkeit verlangen. Darüber hinaus müssen im Bereich von Fahrbahnen von Straßen häufig Reparatur- oder Pflegearbeiten durchgeführt werden, wozu temporär Baustellen eingerichtet werden, die häufig eine geänderte Führung der Fahrspuren mit sich bringen und zur Vermeidung von Unfällen eine Reduktion der Geschwindigkeit der die Baustelle passierenden Fahrzeuge erfordern.

Zukünftig werden in Fahrzeugen vermehrt Überwachungssysteme eingesetzt werden, die beispielsweise einen Bereich vor dem Fahrzeug und/oder seitlich des Fahrzeugs im Hinblick auf darin befindliche Gegenstände überwachen. Informationen solcher Überwachungssysteme können dann dazu verwendet werden, bei Erkennung einer Gefahrensituation den Fahrer zu warnen oder ggf. sogar als Grundlage für Eingriffe in die Steuerung des Fahrzeugs, d.h. die Lenkung und/oder die Beschleunigung bzw. Verzögerung des Fahrzeugs, zu dienen.

Hierzu ist es notwendig, Verfahren bereitzustellen, mittels derer gekennzeichnete Gefahr- und/oder Baustellen einfach erkennbar sind.

DE 197 43 255 A1 beschreibt ein Erkennungssystem zur Erkennung eines Objektes, z.B. eines Fußgängers, welches sich in Richtung auf den Fahrweg eines Fahrzeugs bewegt. Das Erkennungssystem stellt die Quergeschwindigkeit und die Längsentfernung des Objekts fest, um zu erkennen, ob die Gefahr besteht, dass das Objekt in den Fahrweg hineinläuft.

In der US 2002/0032515 A1 werden vor einem Fahrzeug befindliche Objekte detektiert und in Abhängigkeit von der relativen Lage und Geschwindigkeit des Fahrzeugs zu einem Objekt entweder ein Warnsignal ausgegeben oder ein Bremseingriff vorgenommen. Darüber hinaus kann mittels einer CCD-Kamera entschieden werden, ob es sich bei dem Objekt um ein stehendes Fahrzeug oder um ein neben der Fahrbahn befindliches Hindernis handelt.

WO 02/092375 A2 beschreibt eine Vorrichtung, die vor einem Fahrzeug auf der Straße befindliche Objekte detektiert, mittels einer Video-Kamera wenigstens einen Teil der vor dem Fahrzeug liegenden Straße aufnimmt, daraus die voraussichtliche Bahn des Fahrzeugs berechnet, und die Fahrspur der Straße bestimmt, in der sich das Fahrzeug befindet, wenn es das Objekt erreicht hat. Dadurch kann bestimmt werden, ob sich das Fahrzeug in derselben Fahrspur wie das Objekt befindet, wenn das Fahrzeug das Objekt erreicht hat.

US 2002/0067292 A1 beschreibt ein Verfahren und eine Vorrichtung zur Ermittlung der Lage eines Fahrzeugs in Bezug auf eine Fahrspur, wobei die Information aus einer mit einem Navigationssystem gekoppelten digitalen Straßenkarte mit der Information, welche ein entfernungsauflösender Sensor liefert, fusioniert wird. Dabei kann das Fahrzeug autonom, ohne Rückgriff auf eine stationäre Verkehrsinfrastruktur (Markierungslinien, Reflektoren), seine aktuelle Lage in Bezug auf die Fahrspur bestimmen.

Weiterhin wird in SPARBERT J ET AL: "Lane detection and street type classification using laser range images" INTELLIGENT TRANSPORTATION SYSTEMS, 2001. PROCEEDINGS. 2001 IEEE AUGUST 25-29, 2001, PISCATAWAY, NJ, USA,IEEE, 25. August 2001 (2001-08-25), Seiten 454-459, ein Verfahren zur Strassendetektion offenbart.

Der vorliegenden Erfindung liegt daher die Aufgabe zugrunde, ein Verfahren zur Erkennung gekennzeichneter Gefahr- und/oder Baustellen im Bereich von Fahrbahnen bereitzustellen.

Die Aufgabe wird gelöst durch ein Verfahren mit den Merkmalen des Anspruchs 1.

Bei dem erfindungsgemäßen Verfahren zur Erkennung von gekennzeichneten Gefahr- und/oder Baustellen im Bereich von Fahrbahnen werden Abstandsbilder eines Erfassungsbereichs eines an einem Fahrzeug gehaltenen Sensors für elektromagnetische Strahlung, insbesondere eines Laserscanners, verwendet, und es wird in den Abstandsbildern nach Kennzeichen für gekennzeichnete Gefahr- und/oder Baustellen gesucht.

Unter einer gekennzeichneten Gefahrstelle im Bereich einer Fahrbahn wird dabei ein dauerhaft oder auch nur provisorisch bzw. temporär als Gefahrstelle gekennzeichneter Abschnitt einer Fahrbahn verstanden. Die Kennzeichnung kann dabei durch in einer vorgegebenen Region typischerweise verwendete Kennzeichen erfolgen. Bei diesem Kennzeichen kann es sich insbesondere um Verkehrszeichen oder Fahrspurmarkierungen handeln. Ein Beispiel für solche Gefahrstellen kann beispielsweise ein Übergang von einer Autobahn mit mehreren Fahrspuren für eine Fahrtrichtung auf einer Fahrbahn für die jeweilige Fahrtrichtung in eine Landstraße mit nur einer Fahrspur für eine Fahrtrichtung sein.

Unter einer Baustelle, die in der Regel auch eine Gefahrstelle darstellt, wird insbesondere auch ein Abschnitt einer Fahrbahn verstanden, an dem selbst oder in dessen Umgebung Arbeiten durchgeführt werden sollen oder werden, und der zu diesem Zweck gekennzeichnet ist. Solche Baustellen brauchen daher nur temporär zu bestehen und weisen dementsprechend auch nur eine temporäre Kennzeichnung auf. Eine Baustelle kann, je nach Art der Arbeiten, ohne weiteres auch für mehrere Monate oder sogar wenige Jahre bestehen.

Unter einer Baustelle wird im Rahmen der vorliegenden Erfindung insbesondere auch die Situation verstanden, bei der Arbeiten, beispielsweise Mäharbeiten am Fahrbahnrand, in einem sich bewegenden Abschnitt entlang der Fahrbahn durchgeführt werden. Zur Kennzeichnung und zum Schutz kann dann ein sich in der Fahrtrichtung der Fahrbahn bewegendes Sicherungsfahrzeug dienen.

Bei dem erfindungsgemäßen Verfahren werden Abstandsbilder verwendet, die mittels des Sensors zur Erfassung elektromagnetischer Strahlung erfasst werden. Unter einem Abstandsbild eines solchen Sensors, das häufig auch als tiefenaufgelöstes Bild oder Entfernungsbild bezeichnet wird, wird eine Menge von bei einer Abtastung des Erfassungsbereichs des Sensors erfassten Abstandsbildpunkten verstanden, denen Punkte bzw., je nach Auflösung des Sensors, auch Bereiche eines von dem Sensor erfassten Gegenstands bzw. der Oberfläche des Gegenstands entsprechen. Die Abstandsbildpunkte, die im Folgenden der Einfachheit halber auch als Bildpunkte bezeichnet werden, umfassen dabei wenigstens der Lage der zugehörigen Gegenstandspunkte bzw. -bereiche entsprechende Koordinaten zur Definition einer Lage dieser Gegenstandspunkte bzw. -bereiche beispielsweise relativ zu dem Sensor wenigstens in einer Fläche, vorzugsweise einer Ebene, die nicht orthogonal zu einer Blickrichtung des Sensors orientiert ist. Aus den Koordinaten kann insbesondere der Abstand der Gegenstandspunkte bzw. -bereiche von dem Sensor ermittelbar sein. Regionen des Erfassungsbereichs, in denen keine Gegenstände vorhanden sind, können, je nach Sensor, trotzdem Abstandsbildpunkte zugeordnet sein, die dann entsprechend gekennzeichnet sein können.

Die Sensoren für elektromagnetische Strahlung zur Erfassung solcher Abstandsbilder sind grundsätzlich bekannt. Bei diesen kann es sich bevorzugt um optoelektronische Sensoren handeln, die eine gute Ortsauflösung bieten und daher für das erfindungsgemäße Verfahren bevorzugt sind.

So können beispielsweise Systeme mit Stereo-Videokameras verwendet werden, die eine Einrichtung zur Umsetzung der von den Videokameras aufgenommenen Abtastdaten in Abstandsbilder aufweisen.

Vorzugsweise werden jedoch Laserscanner verwendet, die bei einer Abtastung einen Erfassungsbereich mit mindestens einem gepulsten Strahlungsbündel abtasten, das einen vorgegebenen Winkelbereich, vorzugsweise mit einer Schwenkbewegung, überstreicht und von einem Punkt bzw. Bereich eines Gegenstands, meist diffus, zurückgeworfene Strahlungspulse des Strahlungsbündels detektieren. Dabei wird zur Entfernungs- bzw. Abstandsmessung die Laufzeit der ausgesandten und zurückgeworfenen Strahlungspulse erfasst. Die so erfassten Abtastdaten für einen Bildpunkt können dann als Koordinaten den Winkel, bei dem der zurückgeworfene Puls erfasst wurde, und die aus der Laufzeit der Strahlungspulse bestimmten Abstand des Gegenständspunktes bzw. -bereichs von dem Laserscanner enthalten. Bei der Strahlung kann es sich insbesondere um sichtbares oder infrarotes Licht handeln.

Der Sensor erfasst dabei die Abstandsbilder in zeitlicher, vorzugsweise zeitlich äquidistanter, Folge, wobei die Bildpunkte innerhalb eines einzelnen Bildes nicht unbedingt nacheinander erfasst zu werden brauchen.

Bei der Umsetzung der Abtastdaten in Bildpunkte können weiterhin Korrekturen z.B. in Bezug auf die Bewegung des Sensors, vorgenommen werden, jedoch ist dies nicht notwendig.

Grundsätzlich kann der Erfassungsbereich beliebig relativ zu dem Fahrzeug angeordnet sein. Vorzugsweise kann er sich wenigstens in einen Bereich hinter dem Fahrzeug erstrecken. Besonders bevorzugt erstreckt er sich wenigstens in einen Bereich vor dem Fahrzeug. Dabei wird unter einem Bereich vor dem Fahrzeug insbesondere ein Bereich verstanden, der in Vorwärtsrichtung bzw. Fahrtrichtung vor dem Fahrzeug liegt. Die Vorwärtsrichtung kann dabei insbesondere parallel zur Längsachse des Fahrzeugs ausgerichtet sein.

Der Sensor ist dabei vorzugsweise so ausgerichtet, dass der Erfassungsbereich des Sensors teilweise einen Bereich um eine gekennzeichnete Gefahr- und/oder Baustelle abdeckt, wenn der Sensor bzw. das Fahrzeug in den Bereich der gekennzeichneten Gefahr- und/oder Baustelle gelangt.

In diesen Abstandsbildern wird erfindungsgemäß nach Kennzeichen für gekennzeichnete Gefahr- und/oder Baustellen gesucht. Hierzu können insbesondere bekannte Verfahren der Objekterkennung und/oder -verfolgung verwendet werden.

Die Kennzeichen können dabei durch entsprechende Vorgaben der Straßenverwaltung bzw. gesetzliche Vorgaben, in Deutschland beispielsweise die Straßenverkehrsordnung, vorgegeben sein.

Durch die Verwendung der Abstandsbilder ist die Lage der Kennzeichen sehr einfach ermittelbar, wobei insbesondere Anordnungen bzw. Verläufe von entsprechenden Kennzeichen auf bzw. entlang der Fahrbahn einfach und sicher erkannt werden können.

Ein weiterer Vorteil dieses Verfahrens besteht darin, dass die Abstandsbilder parallel dazu verwendet werden können, eine Verfolgung von Objekten durchzuführen, die anderen Gegenständen in dem Erfassungsbereich des Sensors, beispielsweise anderen Fahrzeugen, entsprechen.

Erfindungsgemäß wird ein Typ einer Fahrbahn umfassenden Straße ermittelt.

Weiterbildungen und bevorzugte Ausführungsformen der Erfindung sind in den Ansprüchen, der Beschreibung und den Zeichnungen beschrieben.

Als Kennzeichen für gekennzeichnete Gefahr- und/oder Baustellen können unterschiedliche Typen von Kennzeichen verwendet werden. So ist es bevorzugt, dass auf der Basis der Abstandsbilder als Kennzeichen Markierungen auf einer Fahrbahn erkannt werden. Die Markierungen können dabei durch auf die Fahrbahn aufgebrachte reflektierende, vorzugsweise retroreflektierende, Schichten bzw. Folien oder auch in der Fahrbahn gehaltene Markierungsnägel, insbesondere mit Reflektoren, gegeben sein. Ein Verfahren zur Erkennung von Markierungen auf einer Fahrbahn auf der Basis von Abstandsbildern ist in der von der Anmelderin der vorliegenden Erfindung am gleichen Tag eingereichten deutschen Patentanmeldung mit dem amtlichen Aktenzeichen DE 10 2004 003 850.3 beschrieben, deren Inhalt hiermit durch Bezugnahme in die Beschreibung aufgenommen wird. Dabei wird die Eigenschaft von Markierungen auf Fahrbahnen verwendet, dass diese von einem geeigneten Sensor zur Erfassung von Abstandsbildern verwendete elektromagnetische Strahlung wesentlich stärker und/oder besser gerichtet zurückwerfen als die normale Fahrbahnoberfläche. Während von Gegenstandspunkten auf der normalen Fahrbahnoberfläche zurückgeworfene elektromagnetische Strahlung eine zur sicheren Detektion zu geringe Intensität aufweisen kann, ist dies für von Markierungen zurückgeworfene elektromagnetische Strahlung in der Regel nicht der Fall. Die Fahrspurmarkierungen sind daher in den Abstandsbildern erkennbar. Gegebenenfalls werden hierzu nur Abstandsbildpunkte in einem bestimmten Bereich vor dem Sensor verwendet, in dem die Unterschiede hinreichend deutlich sind.

Diese Markierungen können beispielsweise Sperrflächen kennzeichnen. Gefahr- und/oder Baustellen weisen häufig verglichen mit normalen Straßenverläufen schmalere Fahrspuren und/oder besondere Krümmungen der Fahrspuren und/oder geänderte Fahrspuren auf, wobei die Fahrspuren durch Fahrspurmarkierungen definiert sind. Insbesondere werden häufig provisorische Fahrspurverläufe durch auf die Fahrbahn aufgebrachte Folien gekennzeichnet. Es ist daher bevorzugt, dass in den Abstandsbildern als Kennzeichen Fahrspurmarkierungen gesucht werden, und dass die Lage und/oder der Verlauf und/oder wenigstens eine Eigenschaft der Fahrspurmarkierungen zur Erkennung der Gefahr- und/oder Baustelle verwendet wird. Ein entsprechendes Verfahren zur Suche von Fahrspurmarkierungen ist in der in dem vorhergehenden Absatz genannten, in Bezug genommenen deutschen Patentanmeldung beschrieben.

Zur Kennzeichnung von Gefahr- und/oder Baustellen werden jedoch nicht nur Markierungen auf der Fahrbahn verwendet. Es ist daher bevorzugt, dass in den Abstandsbildern nach unbewegten, Gefahr- und/oder Baustellen, insbesondere temporäre Änderungen des Fahrspurverlaufs und/oder Fahrbahnverlaufs, kennzeichnenden Gegenständen als Kennzeichen gesucht wird. Bei diesen Gegenständen kann es sich insbesondere um Barrieren, Pylone oder Baken handeln, die meist provisorisch zur Änderung des Fahrspurverlaufs oder Abgrenzung eines Bereichs auf oder neben der Fahrbahn aufgestellt werden.

Diese Gegenstände können häufig von anderen, sich in dem Abstandsbild ähnlich darstellenden, nicht Gefahr- und/oder Baustellen kennzeichnenden Gegenständen dadurch unterschieden werden, dass sie in einer bestimmten vorgegebenen Weise angeordnet sind. Es ist daher besonders bevorzugt, dass bei Auffinden von unbewegten, Gefahr- und/oder Baustellen kennzeichnenden Gegenständen auch deren relative Anordnung zueinander und/oder zum Fahrspur- oder -bahnverlauf geprüft wird. Beispielsweise werden Warnbaken häufig in engen regelmäßigen Abständen voneinander aufgestellt, und sind so von anderen, ähnlichen Objekten wie Leitpfosten, die in wesentlich weiteren Abständen voneinander entlang der Fahrbahn angeordnet sind, oder unregelmäßig angeordneten Gegenständen, wie beispielsweise Bäumen, zu unterscheiden.

Als Kennzeichen für Gefahr- und/oder Baustellen können Gegenstände verwendet werden, die an einer Baustelle in erster Linie eine andere Funktion erfüllen, als die einer Kennzeichnung. Beispielsweise dienen Barrieren wesentlich auch zum Schutz vor einem Verlassen der durch diese definierten Fahrspur. Vorzugsweise werden jedoch Gegenstände verwendet, die zur Kennzeichnung vorgesehen, d.h. ausgebildet und/oder angeordnet sind. So ist es bevorzugt, dass zur Erkennung von Gefahr- und/oder Baustellen Gegenstände als Kennzeichen verwendet, die sich durch reflektierende, vorzugsweise retroreflektierende, Bereiche auf der Oberfläche auszeichnen. Unter einem reflektierenden Bereich wird dabei ein Bereich verstanden, der ein auf ihn auftreffendes Strahlungsbündel elektromagnetischer Strahlung, die von dem Sensor verwendet wird, wenigstens teilweise gerichtet und nicht nur diffus streuend zurückwirft.

Zu der Erkennung solcher Gegenstände bzw. Kennzeichen ist es besonders bevorzugt, dass wenigstens ein von dem Sensor erfasstes Abstandsbild mit Abstandsbildpunkten verwendet wird, die jeweils durch Aussendung eines Pulses elektromagnetischer Strahlung und Detektion des von einem Punkt oder Bereich auf einem Gegenstand jeweils als Echopuls zurückgeworfenen Pulses sowie Erfassung wenigstens einer von der Energie des Echopulses abhängigen Echopulseigenschaft des Echopulses erhalten wurden und dem jeweils wenigstens einen Wert für einen Parameter für die Echopulseigenschaft zugeordnet ist, dass wenigstens einem Objekt Abstandsbildpunkte des Abstandsbildes zugeordnet werden, und dass dem Objekt in Abhängigkeit von wenigstens einem der Parameterwerte für die Echopulseigenschaft, die denen dem Objekt zugeordneten Abstandsbildpunkten zugeordnet sind, eine Objektklasse zugeordnet wird.

Die Objektklassen können insbesondere zum einen danach gewählt werden, welche Typen von Gegenständen für die Zwecke der Erkennung von Gefahr- und/oder Baustellen sinnvollerweise als gleichartig behandelt werden sollten, und zum anderen danach, ob diese gleichartigen Gegenstände bzw. Typen von anderen Typen von Gegenständen mit den verfügbaren Informationen, insbesondere Informationen in dem Abstandsbild und den zugeordneten Parameterwerten der Echopulseigenschaft, unterscheidbar sind. So können beispielsweise Objektklassen für Personenkraftwagen, Lastkraftwagen, Warnbaken, Verkehrsschilder und Sicherungsfahrzeuge, d.h. Lastkraftwagen mit großen reflektierenden Flächen am Heck, Fußgänger und sonstige Gegenstände vorgegeben werden.

Durch die Verwendung der Echopulseigenschaft sind zusätzlich zu den Lageinformationen in einem Abstandsbild Informationen über die optischen Eigenschaften von erfassten Punkten oder Bereichen auf Gegenständen verfügbar. Dies kann zum einen eine sichere Zuordnung erleichtern. Zum anderen wird die Verwendung einer größeren Anzahl von Objektklassen ermöglicht.

Bei der Verwendung der Echopulseigenschaft wird davon ausgegangen, dass die Energie der ausgesendeten Pulse jeweils fest vorgegeben oder zumindest indirekt, beispielsweise über den Wert wenigstens eines Parameters, der von der Intensität oder vorzugsweise der Energie des ausgesendeten Pulses abhängt, bekannt ist, so dass es grundsätzlich möglich ist, den Echopulsen zugeordnete Parameterwerte auf die Energie bzw. Intensität der ausgesendeten Pulse zu beziehen. Die Echopulse weisen eine Echopulsenergie auf, die zum einen von den Eigenschaften des von dem Sensor abgegebenen Pulses, insbesondere dessen Form und Energie, und zum anderen beispielsweise von der Größe des Bereichs auf den Gegenstand, von dem der Puls zurückgeworfen wird, der Neigung des Bereichs gegenüber der Ausbreitungsrichtung des Pulses und den optischen Eigenschaften der Oberfläche des Bereichs, insbesondere dessen Remissionseigenschaften, abhängt. Die erfasste Echopulseigenschaft bzw. der Parameter braucht dabei nicht ausschließlich von der Energie des Echopulses abzuhängen. Da der Echopuls räumlich gesehen einen Querschnitt aufweisen kann, der größer ist als ein Empfangselement des Sensors und zusätzlich in Abhängigkeit von den Eigenschaften des Gegenstandspunktes variieren kann, wird im Rahmen der Erfindung unter der Echopulsenergie jeweils die von dem Sensor empfangbare Energie des Echopulses verstanden, die bedingt durch die verglichen mit dem Strahlquerschnitt des Echopulses oft kleine Fläche des Empfangselements gegenüber der tatsächlichen, über den gesamten Strahlquerschnitt des Echopulses integrierten Energie reduziert sein kann.

Insbesondere in dem Fall, dass das Empfangselement des Sensors, das den Echopuls erfasst, sich nicht über die gesamte Querschnittsfläche des Echopulses bzw. des entsprechenden Strahlenbündels erstreckt und so nicht die Gesamtenergie des Echopulses empfängt, wird nur das Produkt aus der Echopulsintensität und der Fläche des Empfangselements empfangen, das jedoch in guter Näherung proportional zu der Echopulsgesamtenergie ist. Die Intensität des Echopulses ändert sich jedoch bei einem nicht perfekt parallelen Echopulsstrahlungsbündel mit der Entfernung. Es ist daher bevorzugt, dass die den Abstandsbildpunkten zugeordneten Parameterwerte für die Echopulseigenschaft in Bezug auf den durch den jeweiligen Abstandsbildpunkt gegebenen Abstand von dem Sensor korrigiert werden. Insbesondere können hierzu die Parameterwerte mit dem Quadrat der Abstandswerte in den Abstandsbildpunkten, denen die Parameterwerte jeweils zugeordnet sind, multipliziert werden. Die sich auf diese Weise ergebenden Parameterwerte gegeben in guter Näherung die Gesamtenergie der Echopulse wieder und können vorzugsweise proportional zu dieser sein.

Grundsätzlich können als Echopulseigenschaft beliebige Eigenschaften des Echopulses verwendet werden, die von der Energie des Echopulses abhängen. Bei einer Ausführungsform des erfindungsgemäßen Verfahrens ist es bevorzugt, dass als Echopulseigenschaft eine Breite des jeweiligen Echopulses oder eines entsprechenden Signalpulses eines den Echopuls empfangenden Empfangselements des Sensors bei einem vorgegebenen Pegel verwendet wird. Unter der Breite des Echopulses wird dabei der Abstand von zwei Zeitpunkten verstanden zu denen die Intensität des Echopulses bzw. die mit der Fläche des jeweiligen Empfangselements des Sensors multiplizierten Intensität des Echopulses bzw. ein entsprechendes Signal des Empfangselements einen vorgegebenen Pegel zuerst überschreitet bzw. dann wieder unterschreitet. Da der Pegel absolut vorgegeben ist und die Flanken von Echopulsen eine nur endliche Steigung aufweisen, hängt die Breite des Echopulses bei vorgegebenen, von dem Sensor abgegebenen Pulsen unmittelbar mit der Energie des Echopulses zusammen. Der vorgegebene Pegel ist dabei vorzugsweise möglichst klein, aber doch so groß gewählt, dass Rauschen unterdrückt und nicht als Echopuls erkannt wird. Die Verwendung dieser Echopulseigenschaft ist besonders vorteilhaft, da zumindest bei der Verwendung von Laserscannern häufig das Überschreiten und/oder Unterschreiten des vorgegebenen Pegels zur Messung der Laufzeit eines Pulses verwendet wird und damit die Ermittlung der Echopulsbreite apparativ sehr einfach erfolgen kann. Alternativ oder zusätzlich ist es bevorzugt, dass als Echopulseigenschaft eine Pulsfläche des jeweiligen Echopulses oder dessen Höhe verwendet wird. Dabei wird bei Echopulsen, deren Strahlquerschnitt größer als die Fläche eines Empfangselements des Sensors ist, unter der Pulsfläche des jeweiligen Echopulses insbesondere die über die Dauer des Pulses integrierte Echopulsintensität multipliziert mit einer Fläche des Empfangselements bzw. das entsprechend integrierte Signal des Empfangselements verstanden.

Zur Klassifizierung können die Parameterwerte für die Echopulseigenschaft in verschiedener Form verwendet werden. Beispielsweise kann als Klassifikationskriterium verwendet werden, dass wenigstens einem dem jeweiligen Objekt zugeordneten Bildpunkte oder allen dem jeweiligen Objekt zugeordneten Bildpunkten ein Parameterwert zugeordnet ist, der einer einem Empfangselement des Sensors empfangenen, gegebenenfalls in Bezug auf einen Abstand korrigierten Echopulsenergie entspricht, die eine entsprechende vorgegebene Mindestechopulsenergie übersteigt. Die Mindestechopulsenergie kann dabei beispielsweise der von dem Empfangselement des Sensors empfangenen, gegebenenfalls in Bezug auf einen Abstand korrigierten Echopulsenergie eines von einem Reflektor zurückgeworfenen Echopulses entsprechen. Alternativ oder zusätzlich kann zur Klassifizierung ein Verlauf des Parameters entlang eines Konturabschnitts des Objekts verwendet werden. Dabei kann ein erfasster Verlauf insbesondere mit einem Referenzverlauf, der für eine Objektklasse vorgegeben ist, verglichen werden.

Einem Objekt können, da die Zuordnung nicht immer eindeutig zu sein braucht, auch mehrere Objektklassen zugeordnet werden. In diesem Fall wird vorzugsweise dem Objekt für jede zugeordnete Objektklasse auch eine entsprechende Zuordnungsgüte zugeordnet, die ein Maß dafür sein kann, wie eindeutig und/oder zutreffend die Zuordnung der jeweiligen Objektklasse zu dem Objekt ist. Im Laufe einer Objektverfolgung kann die Zuordnungsgüte auf der Basis der zusätzlich gewonnenen Informationen verändert werden.

Die Einordnung erkannter Gegenstände in Objektklassen bzw. die Zuordnung von Objektklassen zu Objekten erleichtert wesentlich die Interpretation von Abstandsbildern und insbesondere die Erkennung von Gefahrund/oder Baustellen.

Werden Abstandsbilder verwendet, denen jeweils Parameterwerte für eine Echopulseigenschaft zugeordnet sind, so kann diese Information auch zur Objektverfolgung verwendet werden. Es ist daher bevorzugt, dass Abstandsbilder mit Abstandsbildpunkten verwendet werden, die jeweils durch Aussendung eines Pulses elektromagnetischer Strahlung und Detektion des von einem Punkt oder Bereich auf einen Gegenstand als Echopuls zurückgeworfenen Pulses sowie Erfassung wenigstens einer von der Energie des Echopulses abhängigen Echopulseigenschaft des Echopulses erhalten wurden und denen jeweils wenigstens ein Wert für einen Parameter für die Echopulseigenschaft zugeordnet ist, dass in aufeinanderfolgenden Zyklen jeweils in einem aktuellen Zyklus in einem aktuellen Abstandsbild nach Abstandsbildpunkten gesucht wird, die einem aus einem vorhergehenden Zyklus bekannten Objekt entsprechen, und aus dem Objekt zugeordneten Abstandsbildpunkten des aktuellen Abstandsbildes eine aktuelle Lage des Objekts ermittelt wird, wobei den Abstandsbildpunkten jeweils zugeordnete Parameterwerte der Echopulseigenschaft verwendet werden. Die zugeordneten Parameterwerte werden also bei der Objektverfolgung verwendet, wobei sie vorzugsweise nicht in ein zur Segmentierung des Abstandsbildes verwendetes Segmentierungskriterium eingehen bzw. zur Segmentierung verwendet werden. Die Parametereigenschaft kann in verschiedener Art und Weise verwendet werden. So kann beispielsweise die Echopulseigenschaft dazu verwendet werden, die Zuordnung von Abstandsbildpunkten eines aktuellen Abstandsbildes zu einem aus einem vorhergehenden Zyklus bekannten Objekt zu unterstützen. Dies kann beispielsweise dadurch geschehen, dass einem Objekt wenigstens ein auf den Parameterwerten für die Echopulseigenschaft basierendes Merkmal, beispielsweise in Bezug auf einen Verlauf der Parameterwerte entlang eines Konturabschnitts des Objekts, oder die Größe wenigstens eines einem Abstandsbildpunkt zugeordneten Parameterwertes, zugeordnet ist und dass dieses Merkmal bei der Zuordnung wiedererkannt wird. Hierzu können beispielsweise entsprechende Daten in Bezug auf das Merkmal aus einem vorhergehenden Zyklus mit denen des aktuellen Zyklus verglichen werden.

Weiterhin können die Parameterwerte für die Echopulseigenschaft dazu verwendet werden, insbesondere bei einer Teilverdeckung von Objekten, die Lage der teilverdeckten Objekte zu ermitteln. Hierzu kann insbesondere ein Merkmal verwendet werden, das den Verlauf des Parameters für die Echopulseigenschaft entlang eines Konturabschnitts betrifft.

Hierdurch wird eine Objektverfolgung stark vereinfacht, so dass eine zuverlässigere Objektverfolgung gerade in einem Gefahr- und/oder Baustellenbereich erfolgen kann, was die Zuverlässigkeit der damit erhaltenen Information erhöht.

Wenn Gefahr- und/oder Baustellen nur temporär bzw. provisorisch sind, zeichnen sich diese dadurch aus, dass der Verlauf von Fahrspuren oder die Breite von Fahrspuren gegenüber dem normalerweise vorhandenen Verlauf verändert ist. Um diesen normalen Verlauf ermitteln zu können, ist es bevorzugt, dass eine digitale Karte, vorzugsweise in Verbindung mit einem Positionserfassungssystem, verwendet wird, um eine zu erwartende Gestaltung und/oder eine zu erwartende Lage und/oder einen zu erwartenden Verlauf einer Fahrspur und/oder der Fahrbahn und/oder einer die Fahrbahn umfassenden Straße oder einen zu erwartenden Typ der Straße bereitzustellen. Als Positionserfassungssystem kann dabei vorzugsweise ein satellitengestütztes Navigationssystem wie beispielsweise das GPS (Global Positioning System) oder das geplante europäische Satellitennavigationssystem GALILEO verwendet werden. Aus der digitalen Karte kann anhand der Position insbesondere ermittelt werden, auf was für einem Typ von Straße sich das Fahrzeug, an dem der Sensor wie auch das Positionserfassungssystem gehalten sind, sich bewegt und, bei entsprechender Genauigkeit der digitalen Karte und der Positionsbestimmung, auf welcher Fahrspur der Straße sich das Fahrzeug befindet. Darüber hinaus kann anhand des Straßentyps ermittelt werden, welche Eigenschaften die darauf vorhandenen Fahrspuren bzw. Fahrspurmarkierungen aufweisen müssen. Straßentypen und entsprechende Spezifikationen für Fahrspuren darauf können durch Gesetze oder Verordnungen für eine Region festgelegt sein. Weiterhin können auf einer digitalen Karte Angaben zur Gestaltung einer Straße wenigstens in bestimmten Bereichen, beispielsweise bei Reduktion der Anzahl von Fahrspuren, angegeben sein, die für die Erkennung verwendet werden können.

Weiterhin ist es bevorzugt, dass Verkehrsfunkinformationen in Bezug auf Gefahr- und/oder Baustellen verwendet werden. Diese Informationen, insbesondere in Verbindung mit Informationen aus einer digitalen Karte, können die Erkennung von Baustellen weiter erleichtern, da sie die Interpretation der Abstandsbilder unterstützen können.

Zur eigentlichen Erkennung einer gekennzeichneten Gefahr- und/oder Baustelle wird geprüft , ob wenigstens ein Kriterium in Bezug auf Kennzeichen für gekennzeichnete Gefahr- und/oder Baustellen erfüllt ist. Vorzugsweise werden mehrere alternativ oder kumulativ zu erfüllende Kriterien überprüft, da Gefahr- und/oder Baustellen durch sehr unterschiedliche, von der Situation abhängige Kennzeichen erkennbar sein können.

Dazu ist es besonders bevorzugt, dass das Kriterium geprüft wird, ob erkannte Fahrspurmarkierungen einen eindeutigen Verlauf von Fahrspuren definieren. Der Verlauf von Fahrspuren ist häufig in Baustellenbereichen nicht eindeutig, wenn keine Farbinformation in Bezug auf die Fahrspurmarkierungen ausgewertet wird, da dort zusätzlich zu den dauerhaft vorhandenen Fahrspurmarkierungen provisorische Fahrspurmarkierungen, beispielsweise in Form von reflektierenden oder retroreflektierenden Folienstreifen, aufgebracht werden, die sich zwar farblich von den dauerhaften Fahrspurmarkierungen unterscheiden, im Abstandsbild unter Verwendung von Parameterwerten in Bezug auf eine Echopulseigenschaft aber nicht von den dauerhaften Fahrspurmarkierungen unterscheidbar sind.

Weiterhin ist es besonders bevorzugt, dass das Kriterium geprüft wird, ob erkannte Fahrspuren eine durch den Typ der Straße vorgegebene Mindestbreite aufweisen. Die Ermittlung des Straßentyps kann dabei zum einen dadurch erfolgen, dass Informationen aus einer digitalen Karte verwendet werden. Zum anderen kann der Typ von Straße auch aus Abstandsbildern in vorhergehenden Zyklen ermittelt werden, wozu das Vorhandensein und gegebenenfalls die Lage von charakteristischen Gegenständen, wie beispielsweise Leitpfosten, und/oder die Anzahl, die Breite und/oder der Verlauf von erkannten Fahrspuren verwendet werden kann. Dieses Vorgehen erscheint insbesondere dann günstig, wenn das Fahrzeug an den Anfang einer Baustelle gelangt und daher aus den vorhergehenden Zyklen der normale Zustand der Straße ohne Baustelle erkannt wird. Durch den Typ der Straße bzw. damit auch der Fahrbahn ist dann in der Regel, beispielsweise durch entsprechende Verordnungen oder Gesetze, eine Mindestbreite der Fahrspuren im Normalzustand, d.h. ohne Baustelle, vorgegeben. Bei Bauarbeiten wird jedoch häufig eine Fahrspur gesperrt und die verbleibenden Fahrspuren werden durch provisorische Fahrspurmarkierungen in schmalere, provisorische Fahrspuren aufgeteilt, die dann eine Breite aufweisen können, die geringer als die vorgegebene Mindestbreite ist. Dieses Kriterium ist insbesondere nützlich, wenn das Fahrzeug sich innerhalb eines Baustellenbereichs bewegt.

Darüber hinaus ist es besonders bevorzugt, dass ein Typ einer die Fahrbahn umfassenden Straße ermittelt wird, dass ein Krümmungsradius einer Fahrspur auf der Fahrbahn oder der Fahrbahn ermittelt wird, und dass das Kriterium geprüft wird, ob der ermittelte Krümmungsradius einen für den Typ der Straße zulässigen Minimalradius unterschreitet. Auch hier wird ausgenutzt, dass im Normalzustand bestimmte Typen von Straßen, beispielsweise in Deutschland Autobahnen oder auch Bundesstrassen, bzw. deren Fahrbahnen und Fahrspuren nur Krümmungen bzw. Kurven aufweisen, deren Krümmungsradius einen für den Typ der Straße zulässigen Minimalradius überschreiten. Durch Ermittlung des Typs der Straße, auf dem sich das Fahrzeug mit dem Sensor befindet, und die Ermittlung des Krümmungsradius einer Fahrspur auf dieser Fahrbahn kann so einfach ermittelt werden, ob eine Abweichung von dem normalen Zustand vorliegt, der darauf hinweisen könnte, dass eine Gefahrund/oder Baustelle vorliegt.

Bei dem Verfahren ist es weiter besonders bevorzugt, dass das Kriterium überprüft wird, ob ein Versatz oder eine Verjüngung wenigstens einer Fahrspur und/oder der Fahrbahn erkannt wird. Ein solcher Versatz von Fahrspuren und/oder Fahrbahnen, bei dem die Fahrspuren insbesondere im Wesentlichen S-förmig verlaufen können, oder eine Verjüngung von Fahrspuren, d.h. Reduktion der Breiten von Fahrspuren, tritt häufig auf, wenn eine normale Fahrspur einer Fahrbahn beispielsweise für Bauarbeiten gesperrt wird und so die vor der Baustelle vorhandenen Fahrspuren durch den Versatz neben die gesperrte Fahrspur geführt werden, wobei sie gleichzeitig verjüngt, d.h. auf eine geringere Breite reduziert werden.

Weiterhin kann bei einer Gefahr- und/oder Baustelle auch einfach nur eine Fahrspur enden. Es ist daher bevorzugt, dass das Kriterium überprüft wird, ob eine erkannte Fahrspur endet.

Es kann bei dem erfindungsgemäßen Verfahren davon ausgegangen werden, dass sich der Fahrzeugführer des den Sensor tragenden Fahrzeugs verkehrsgerecht verhält. Das Fahrzeug sollte sich dann, wenn keine Baustelle vorliegt, nur in bestimmten Positionen auf der Straße, beispielsweise bestimmten Fahrspuren, befinden. Es ist daher bevorzugt, dass das Kriterium geprüft wird, ob die Position des Sensors einer zu erwartenden Position auf der Straße entspricht. Die Ermittlung des Straßentyps kann dabei wie zuvor erfolgen. Insbesondere kann hierzu auch geprüft werden, ob das den Sensor tragende Fahrzeug bei Zugrundelegen eines normalen Fahrbahn- oder Fahrspurverlaufs eine Fahrbahnbegrenzung durchbrochen hätte, jedoch keine Beeinträchtigung des Fahrverhaltens aufgetreten ist.

Insbesondere auf Autobahnen, bei denen im normalen Zustand ohne Baustellen in der Regel zwei getrennte Fahrbahnen vorgesehen sind, von denen jeweils eine für eine Fahrtrichtung vorgesehen ist, wird für Bauarbeiten an einer Fahrspur einer Fahrbahn in einer Richtung häufig eine Fahrspur dieser Fahrbahn für eine Richtung auf die andere Fahrbahn für die andere Fahrtrichtung umgelenkt. Es ist daher bevorzugt, dass das Kriterium überprüft wird, ob sich der Sensor auf einer Straße befindet, die eine Fahrbahn aufweist, die für Verkehr in nur einer Richtung vorgesehen ist, und ob sich der Sensor auf dieser Fahrbahn befindet und entgegen der vorgesehenen Fahrtrichtung bewegt. Diese Prüfung kann zum einen dadurch erfolgen, dass eine Position des Sensors bzw. eines den Sensor tragenden Fahrzeugs, beispielsweise durch Verwendung eines Positionsbestimmungssystems, ermittelt wird und anhand einer digitalen Karte geprüft wird, ob sich die ermittelte Position auf der entsprechenden Fahrbahn einer Straße befindet.

Alternativ ist es bevorzugt, dass eine Objektverfolgung für Fahrzeugen entsprechende Objekte durchgeführt wird, und dass aus den Abstandsbildern ermittelt wird, ob auf der Fahrbahn, auf der sich das Fahrzeug mit dem Sensor befindet, entgegenkommende Objekte feststellbar sind. Dieses Vorgehen hat den Vorteil, dass eine sehr genaue Positionsbestimmung nicht notwendig ist.

Das Verhalten anderer Verkehrsteilnehmer kann auch als Anzeichen für eine Gefahr- und/oder Baustelle verwendet werden. Es ist daher bevorzugt, dass auf der Basis der Abstandsbilder einer Objektverfolgung von Gegenständen wenigstens im Bereich der Fahrbahn durchgeführt wird, dass die Geschwindigkeit von Fahrzeugen auf der Fahrbahn entsprechenden Objekten ermittelt wird, und dass das Kriterium geprüft wird, ob die ermittelten Geschwindigkeiten ein Geschwindigkeitskriterium für das Vorliegen einer Gefahr- und/oder Baustelle erfüllen. Die Objektverfolgung kann dabei mit konventionellen, auf Abstandsbildern basierenden Objektverfolgungsverfahren erfolgen. Das Geschwindigkeitskriterium kann beispielsweise dadurch gegeben sein, dass die Geschwindigkeiten von Fahrzeugen entsprechenden Objekten kleiner als eine vorgegebene Grenzgeschwindigkeit sind. Die Grenzgeschwindigkeit kann in Abhängigkeit von einem ermittelten Straßentyp vorgegeben werden. Beispielsweise sind in Deutschland Geschwindigkeiten von beispielsweise weniger als 70 km/h auf Autobahnen ohne Baustelle untypisch.

Vorzugsweise wird dabei noch eine Verkehrsdichte ermittelt, um eine Unterscheidung gegenüber zähfließendem, dichtem Verkehr, der nur durch andere Gründe hervorgerufen ist, vornehmen zu können.

Es ist jedoch auch möglich, die Geschwindigkeiten anderen Fahrzeugen entsprechender Objekte über einen vorgegebenen Zeitraum zu überwachen und als Kriterium zu überprüfen, ob die Geschwindigkeiten von Fahrzeugen reduziert werden, wenn diese einen bestimmten Bereich auf der Fahrbahn erreichen. Ein solches Kriterium eignet sich insbesondere zur Erkennung eines Anfangs einer Gefahr- und/oder Baustelle.

Es wird das Kriterium geprüft , ob wenigstens ein eine Gefahr- und/oder Baustelle kennzeichnender Gegenstand oder eine vorgegebene Anordnung solcher Gegenstände erkannt wurde. Hierbei wird ausgenutzt, dass häufig Baken oder Pylone zur Kennzeichnung von Gefahr- und/oder Baustellen verwendet werden. Dieses sind vorzugsweise in einem engen Abstand voneinander aufgestellt, der zumindest in Deutschland in der Regel wesentlich geringer ist, als der Abstand von die Fahrbahn begrenzenden Leitpfosten, so dass über die Anordnung eine Unterscheidung von diesen möglich ist.

Weiterhin ist es bevorzugt, dass als Kriterium überprüft wird, ob ein Objekt erkannt wurde, das entsprechend dem ermittelten Straßentyp nicht in dem Bereich der potentiellen Gefahr- und/oder Baustelle und/oder der Fahrbahn oder dem Erfassungsbereich vorhanden sein dürfte. Wird ein solches Objekt gefunden, kann dies als Indiz für das Vorliegen einer Baustelle gewertet werden. Beispielsweise sollten sich Fußgänger nicht auf Autobahnen befinden. Bei Autobahnbaustellen kann dies jedoch vorkommen.

Um in Abstandsbildern gleichartig erscheinende, aber verschiedene zur Kennzeichnung dienende Gegenstände besser unterscheiden zu können, ist es bevorzugt, dass zusätzlich Videobilder eines Videoerfassungsbereichs verwendet werden, der sich vorzugsweise wenigstens teilweise mit dem Erfassungsbereich des Sensors für Abstandsbilder überschneidet. Die Videobilder können, vorzugsweise in zeitlicher Folge, mit einem entsprechenden Videosystem, das beispielsweise einen Videosensor und eine Optik zur Abbildung des Videoerfassungsbereichs auf den Videosensor umfassen kann, erfasst werden. Die Erfassung erfolgt dabei vorzugsweise wenigstens mit der Frequenz, mit der auch die Abstandsbilder erfasst werden, oder einem Vielfachen dieser Frequenz. Vorzugsweise werden die Abstands- und Videobilder im Wesentlichen synchron erfasst. Das Videosystem ist vorzugsweise in Bezug auf den Sensor zur Erfassung der Abstandsbilder in einer festen Relativposition gehalten, so dass Informationen aus den Abstandsbildern und den Videobildern miteinander in Beziehung gesetzt werden können. Um die Lagen von Videobildpunkten und Abstandsbildpunkten in Beziehung setzen zu können, können neben der Relativlage insbesondere die Abbildungseigenschaften des Videosystems verwendet werden.

Die Erfassungsbereiche des Sensors für Abstandsbilder und des Videosystems brauchen sich nicht zu überschneiden. Vielmehr können beispielsweise mit einem Videosystem, dessen Erfassungsbereich sich hinter dem Fahrzeug befindet, hinter einem Fahrzeug erkannte Anzeichen für Gefahrund/oder Baustellen auch in Kombination mit Kennzeichen zur Erkennung von gekennzeichneten Gefahr- und/oder Baustellen verwendet werden, die mittels eines Scanners für Abstandsbilder, dessen Erfassungsbereich sich vor dem Fahrzeug befindet, vor dem Fahrzeug erkannt wurden. Vorzugsweise überschneiden sich die Erfassungsbereiche jedoch wenigstens teilweise.

In den Abstandsbildern auftretende, ähnlich erscheinende aber tatsächlich verschiedene Gegenstände können dann in dem Videobild unterschieden werden. Insbesondere kann dabei auch eine Objektverfolgung auf der Basis der Videobilder verwendet werden. Darüber hinaus können zusätzliche Informationen zur Objektklassifizierung verwendet werden. Auch können beispielsweise verschiedene Verkehrschilder unterschieden werden.

Um den Aufwand zur Verarbeitung der Videobilder möglichst gering zu halten, ist es bevorzugt, dass auf der Basis wenigstens eines aktuellen Abstandsbildes ein Bereich in einem entsprechenden aktuellen Videobild festgelegt wird, in dem nach vorgegebenen Videobildmerkmalen gesucht wird. Bei diesen Videobildmerkmalen kann es sich insbesondere um Merkmale handeln, die Gefahr- und/oder Baustellen kennzeichnende Gegenstände von anderen, in Abstandsbildern ähnlich erscheinenden Gegenständen unterscheiden. Durch diese Art der "Aufmerksamkeitssteuerung" brauchen nur kleine Teile eines Videobildes verarbeitet zu werden. Insbesondere ist es nicht notwendig, eine Objektverfolgung auf der Basis der Videobilder durchzuführen, die einen erheblichen Verarbeitungsaufwand mit sich bringen würde. Vielmehr genügt es beispielsweise, in den vorgegebenen Bereichen nach entsprechenden, den Kennzeichen bzw. Gegenständen entsprechenden Mustern zu suchen. Eine Zuordnung von Bildpunkten eines Videobildes zu Bildpunkten eines Abstandsbildes ist beispielsweise in der am 8. November 2001 angemeldeten deutschen Patentanmeldung der Anmelderin der vorliegenden Erfindung mit dem amtlichen Aktenzeichen 10154861.3 beschrieben, deren Inhalt hiermit durch Bezugnahme in die Beschreibung aufgenommen wird. Dieses Vorgehen hat den weiteren Vorteil, dass aufgrund des bekannten Abstands der entsprechenden Abstandsbildpunkte von dem Sensor und damit auch dem Videosystem in den Videobildern gegebenenfalls nach Objekten oder Merkmalen bekannter Größe gesucht werden kann, was die Videobildverarbeitung wesentlich erleichtern und beschleunigen kann.

Weiterhin kann es bevorzugt sein, bei Verwendung einer beweglichen Videokamera oder bei Verwendung mehrerer Videokameras die Videokamera auf der Basis des Abstandsbildes, vorzugsweise der Lage und/oder Größe darin erkannter Objekte, geschwenkt bzw. eine der Videokameras ausgelesen werden.

Dabei ist es besonders bevorzugt, dass in wenigstens einem Abstandsbild nach wenigstens einem Objekt gesucht wird, das einem Träger für ein Blinklicht entsprechen könnte, und dass in einem entsprechenden Bereich eines Videobildes nach einer blinkenden Lichtquelle gesucht wird.

Solche blinkenden Lichtquellen bzw. Blinklichter können insbesondere auf Warnbaken und an Sicherungsfahrzeugen gehalten sein. Das Auftreten solcher Lichtquellen ist besonders charakteristisch für bestimmte Gefahr- und/oder Baustellen zumindest im Bereich der Bundesrepublik Deutschland.

Weiterhin ist es bevorzugt, dass als Kriterium geprüft wird, ob ein Sicherungsfahrzeug auf einer Fahrspur steht oder sich mit geringer Geschwindigkeit bewegt. Bei einem solchen Sicherungsfahrzeug kann es sich insbesondere um einen Kleinlastkraftwagen oder einen normalen Lastkraftwagen handeln, der an seiner Heckpartie Blinklichter und/oder große Reflektorflächen und/oder warnende Verkehrsschilder aufweist.

Zur Erkennung von Gefahr- und/oder Baustellen genügt oft nur eines der oben genannten Kriterien alleine nicht. Für eine zuverlässige Erkennung von Gefahr- und/oder Baustellen ist es vielmehr notwendig, diese Kriterien miteinander zu verknüpfen. Dies kann beispielsweise dadurch erfolgen, dass die Ergebnisse der Überprüfung entsprechender Kriterien nach Art eines Expertensystems entsprechend einem Entscheidungsbaum verknüpft und ausgewertet werden.

Da die Kriterien auch in ihrer Kombination jedoch nicht besonders scharf zu sein brauchen, ist es bevorzugt, dass zur Erkennung von Gefahrund/oder Baustellen in Abhängigkeit von den Ergebnissen der Prüfung von wenigstens zwei Kriterien ein neuronales Netz verwendet wird.

Alternativ oder zusätzlich ist es bevorzugt, dass zur Erkennung von Gefahr- und/oder Baustellen in Abhängigkeit von den Ergebnissen der Prüfung von wenigstens zwei Kriterien eine "Support Vector Machine" verwendet wird. Die Verwendung von neuronalen Netzen und "Support Vector Machines" ist beispielsweise in dem Buch Kecman, Vojislav, "Learning and Softcomputing: Support Vector Machines, Neuronal Networks, and Fuzzy Logic Models (Complex Adaptive Systems)", Mit. Press, 2001, ISBN: 0262112558 beschrieben.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird aber insbesondere auch jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogramm auf einem Computer ausgeführt wird. Bei dem Datenträger kann es sich insbesondere um nichtflüchtige Speicher in Form von entsprechenden Halbleiterbauelementen, CDs, DVDs oder auch Disketten handeln.

Darüber hinaus ist Gegenstand der vorliegenden Erfindung eine Vorrichtung zur Erkennung von gekennzeichneten Gefahr- und/oder Baustellen im Bereich von Fahrbahnen mit mindestens einem optoelektronischen Sensor, vorzugsweise einem Laserscanner, mittels dessen Abstandsbilder eines Erfassungsbereichs erfassbar sind, und mit einer mit dem optoelektronischen Sensor verbundenen Datenverarbeitungseinrichtung, die zur Durchführung des erfindungsgemäßen Verfahrens ausgebildet ist.

Die Datenverarbeitungseinrichtung kann insbesondere mit einem erfindungsgemäßen Computerprogramm programmiert sein.

Dabei ist es besonders bevorzugt, dass der Sensor eine Sendeeinrichtung zum Aussenden eines Pulses elektromagnetischer Strahlung, eine Empfangseinrichtung zur Detektion eines von einem Punkt oder Bereich auf einem Gegenstand jeweils als Echopuls zurückgeworfenen Anteils des ausgesendeten Pulses, und eine Einrichtung zur Erfassung wenigstens einer von der Energie des Echopulses abhängigen Echopulseigenschaft des Echopulses aufweist.

Besonders bevorzugt weist der Sensor eine Ablenkeinrichtung zum Schwenken eines von der Sendeeinrichtung abgegebenen Strahlungsbündels über den Erfassungsbereich auf.

Weiterhin ist es bevorzugt, dass die Vorrichtung eine mit der Datenverarbeitungseinrichtung verbundene Einrichtung zur Ermittlung eines Straßentyps aufweist, die vorzugsweise eine in einer Speichereinrichtung gespeicherte digitale Karte und ein Positionsbestimmungssystem aufweist. Das Positionsbestimmungssystem ist vorzugsweise satellitengestützt.

Die Erfindung wird im Folgenden noch weiter unter Bezugnahme auf die Zeichnungen erläutert. Es zeigen:
- Fig. 1: eine schematische Draufsicht auf eine Szene mit einem Fahrzeug, an dem ein Laserscanner angebracht ist, und einem weiteren Fahrzeug auf einer Straße mit mehreren Fahrspuren im Gesamterfassungsbereich des Laserscanners,
- Fig. 2: eine schematische Seitenansicht des Fahrzeugs in Fig. 1 mit fächerartig übereinander angeordneten Teilerfassungsbereichen des Laserscanners,
- Fig. 3: eine schematische Darstellung eines zeitlichen Verlaufs eines Echopulses,
- Fig. 4A, B: ein schematisches Ablaufdiagramm eines Verfahrens zur Erkennung von gekennzeichneten Gefahr- und/oder Baustellen nach einer bevorzugten Ausführungsform der Erfindung,
- Fig. 5: eine teilweise Darstellung eines Gesamtabstandsbildes von einer Fahrbahnabschnitt einer Autobahn mit drei Fahrspuren und einem Standstreifen und eines Histogramms für die Verteilung von auf eine Richtung quer zur Längsrichtung des Fahrzeugs in Fig. 1 projizierten Abstandsbildpunkten des Abstandsbildes bei dem Verfahren nach Fig. 4A,B.
- Fig. 6: eine schematische Darstellung einer Fahrbahn einer Autobahn mit drei normalen Fahrspuren und drei provisorischen Fahrspuren mit einem Versatz und einer Verjüngung.

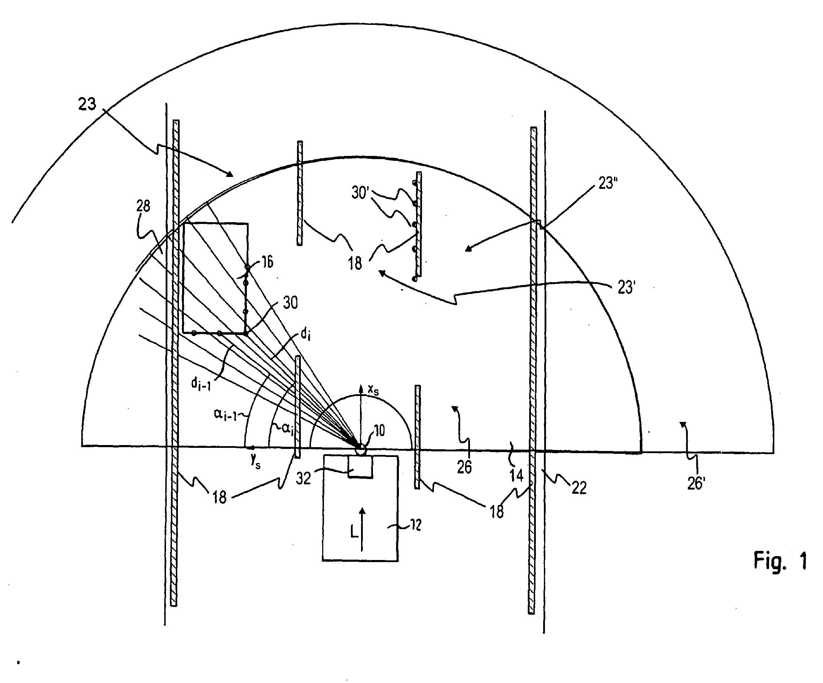

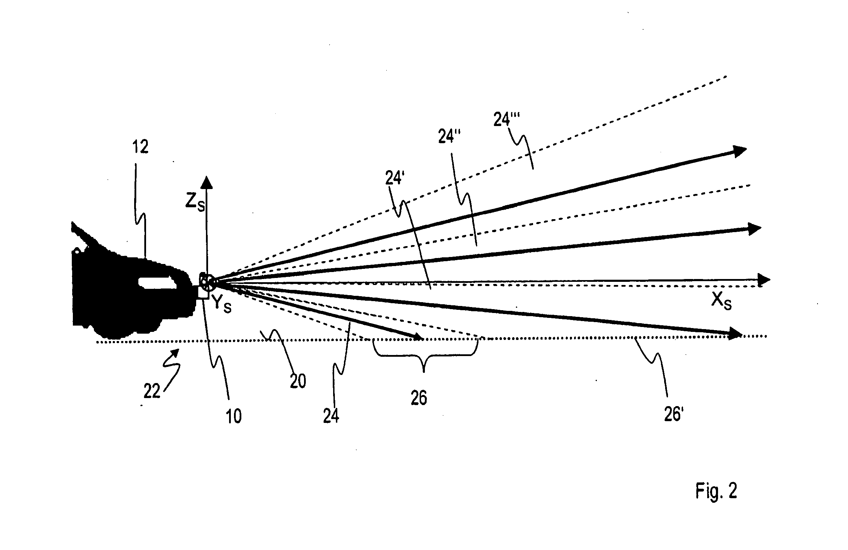

In Fig. 1 und Fig. 2 ist ein Laserscanner 10 an der Frontseite eines Fahrzeugs 12 montiert, um Gegenstände und den Boden vor dem Fahrzeug 12 zu erfassen. Der Laserscanner 10 weist einen in Fig. 1 nur teilweise gezeigten Gesamterfassungsbereich 14 auf, der aufgrund der Lage des Laserscanners symmetrisch zur Längsachse L des Fahrzeugs 12 einen Winkel von etwa 180° abdeckt. Der Gesamterfassungsbereich 14 ist in Fig. 1 und Fig. 2 nur schematisch und zur besseren Darstellung insbesondere in radialer Richtung zu klein dargestellt. In dem Gesamterfassungsbereich 14 befinden sich beispielhaft ein sich relativ zu dem Fahrzeug 12 bewegender Gegenstand 16, im Beispiel ein Fahrzeug, und strichförmige Fahrspurmarkierungen 18 auf einer Oberfläche 20 einer Fahrbahn 22 einer Straße, im Beispiel einer der beiden Fahrbahnen einer Autobahn mit zwei Fahrbahnen, von den jede für nur eine von zwei Fahrtrichtungen vorgesehen ist.

Die aus einem beispielsweise retroreflektierenden Material bestehenden Fahrspurmarkierungen 18, die als Teil der Fahrbahnoberfläche 20 angesehen werden, sind entsprechend Vorgaben für deutsche Autobahnen angeordnet und ausgebildet. Sie bilden parallel verlaufende Fahrspuren 23, 23' und 23", die entsprechend den Vorgaben voneinander beabstandet sind.

Wie in den Fig. 1 und 2 schematisch dargestellt, setzt sich der Gesamterfassungsbereich 14 aus vier wenigstens näherungsweise aneinander grenzenden Teilerfassungsbereichen 24, 24', 24" und 24''' zusammen, die in einer Projektion auf die Fahrbahn 22 bzw. Fahrbahnoberfläche 20 (vgl. Fig. 1) die gleiche Form aufweisen und fächerartig gegeneinander geneigt sind (vgl. Fig. 2). Durch entsprechende Anbringung des Laserscanners 10 an dem Fahrzeug 12 wird erreicht, dass sich bei einer ebenen Fahrbahnoberfläche der Teilerfassungsbereich 24 und die Fahrbahnoberfläche 20 so schneiden, dass ein Abschnitt 26 der Fahrbahnoberfläche 20 mit der Form eines Ringsegments erfassbar ist. Weiter entfernte Teile der Fahrbahn 22 sind über den Teilerfassungsbereich 24' erfassbar, der sich mit der Fahrbahnoberfläche 20 in einem Abschnitt 26' schneidet, der sich an den Abschnitt 26 anschließt. Der Innenrand des Abschnitts 26 hat dabei im Beispiel einen Abstand von etwa 10 m von dem Fahrzeug 12, so dass auch bei einer Nickbewegung des Fahrzeugs 12 immer der Abschnitt 26 der Fahrbahnoberfläche 20 erfassbar ist. Die Breiten der Abschnitte 26 und 26' sind in Fig. 1 und 2 nicht maßstabsgetreu zueinander wiedergegeben, insbesondere ist der Abschnitt 26' in Fig. 1 zu schmal dargestellt.

Der Laserscanner 10 tastet seinen Gesamterfassungsbereich 14 in vier, den Teilerfassungsbereichen 24, 24', 24" und 24''' entsprechenden Abtastebenen in grundsätzlich bekannter Weise mit einem mit konstanter Winkelgeschwindigkeit geschwenkten, gepulsten Laserstrahlungsbündel 28 mit einem strichförmigen Querschnitt ab, wobei ebenfalls umlaufend in konstanten Zeitabständen T zu Zeiten τᵢ in festen Winkelbereichen um einen mittleren Winkel αᵢ mittels vier übereinander angeordneter, in den Figuren nicht gezeigter Empfangselemente detektiert wird, ob das Laserstrahlungsbündel 28 von einem Punkt bzw. Bereich eines Gegenstands bzw. der Fahrbahnoberfläche in dem jeweiligen Teilerfassungsbereich 24, 24', 24", 24''' zurückgeworfen wird. Der Index i läuft dabei von 1 bis zur Anzahl der Winkelbereiche im Erfassungsbereich. Von diesen Winkelbereichen sind in Fig. 1 nur einzelne gezeigt, u. a. die den mittleren Winkeln αᵢ₋₁ und αᵢ zugeordneten Winkelbereiche. Hierbei sind die Winkelbereiche zur deutlicheren Darstellung wiederum übertrieben groß gezeigt. Anhand der Laufzeit des Laserstrahlungspulses wird der Sensorabstand dᵢ des jeweils erfassten Gegenstandpunktes von dem Laserscanner 10 ermittelt. Der Laserscanner 10 erfasst daher in seinem xₛ- yₛ- Koordinatensystem als Koordinaten in einem Rohdatenelement für einen Gegenstandspunkt 30 auf der Oberfläche des Gegenstands 16 den Winkel αᵢ und den bei diesem Winkel festgestellten Abstand dᵢ, d.h. die Position des Gegenstandspunktes 30 in Polarkoordinaten relativ zu dem Fahrzeug 12. Entsprechendes gilt für Gegenstandspunkte 30' auf der Fahrbahnoberfläche 20. Bei einer Abtastung des Gesamterfassungsbereichs 14 werden von dem Laserscanner 10 somit, geordnet nach aufsteigenden Polarwinkeln, Rohdatenelemente mit Koordinaten (αᵢ, dᵢ) bereitgestellt, wobei i eine natürliche Zahl zwischen 1 und der Anzahl der von dem Laserscanner 10 erfassten Rohdatenelemente ist. Die Menge der bei einer Abtastung erfassten Rohdatenelemente bzw. der daraus, gegebenenfalls nach Korrektur der Daten und/oder Transformation in ein anderes Koordinatensystem, erhaltenen Abstands- bzw. Entfernungsbildpunkte für einen der Teilerfassungsbereiche 24, 24', 24" und 24''', im Folgenden einfach als Bildpunkte bezeichnet, bildet jeweils ein Abstandsbild des jeweiligen Teilerfassungsbereichs. Insbesondere können das aus diesen Abstandsbildern zusammengesetztes Gesamtabstandsbild wie auch die einzelnen Abstandsbilder der Teilerfassungsbereiche Abstandsbilder im Sinne der Erfindung bilden. Die Bildpunkte für jede Abtastebene werden dabei in der Reihenfolge der Erfassung, d.h. zunehmender Polarwinkel, abgespeichert.

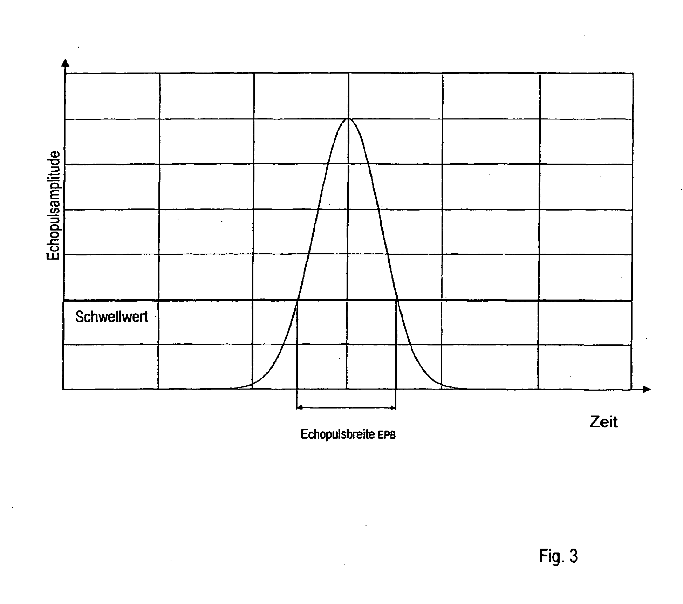

Bei der Erfassung eines Bildpunkts bzw. eines Rohdatenelements wird nicht nur die Laufzeit des Laserstrahlpulses ermittelt, sondern es wird auch eine Echopulsbreite (EPB) des jeweils von dem Gegenstand zurückgeworfenen Echopulses bestimmt. In Fig. 3 ist schematisch der zeitliche Verlauf der Intensität eines Echopulses gezeigt. Ein in den Figuren nicht gezeigtes Empfangselement des Laserscanners 10, mit dem der Echopuls empfangen wird, gibt ein in seiner Form der Form des Echopulses entsprechendes Signal aus, das das Produkt aus der Empfangsfläche des Empfangselements und der empfangenen Intensität des Echopulses wiedergibt. Die Intensität des Echopulses ist dabei proportional zur Energie des Echopulses. Die Echopulsbreite wird nun dadurch ermittelt, dass der Abstand von zwei Zeitpunkten ermittelt wird, zu denen die Intensität des Echopulses bzw. genauer ein Pegels eines entsprechendes Signals einen vorgegebenen Pegel ansteigend bzw. abfallend erreicht (vgl. Fig. 3). Dies wird in dem Laserscanner 10 in der Form realisiert, dass für das entsprechende Signal des Empfangselements des Laserscanners 10 ein entsprechender Signalschwellwert bzw. -pegel gesetzt wird und dass der Abstand von zwei Zeitpunkten ermittelt wird, zu denen das Signal den Signalschwellwert ansteigend bzw. abfallend erreicht. Der vorgegebene Signalschwellwert bzw. Pegel ist so gewählt, dass Rauschen nicht als Echopuls erkannt werden kann. Da die Echopulse keine Rechteckform haben, weist ein Echopuls gleicher Form, aber geringerer Energie bzw. Intensität entsprechend der Verjüngung des Echopulses in Richtung auf sein Maximum zu auch eine geringere Echopulsbreite auf. Die jeweils erfassten Echopulsbreiten werden den Abstandsbildpunkten zugeordnet, bei deren Erfassung sie jeweils ermittelt wurden.

Der Laserscanner 10 tastet seinen Gesamterfassungsbereich 14 bzw. die Erfassungsbereiche 24, 24', 24" und 24''' jeweils in aufeinander folgenden Abtastungen mit gleichem Zeitabstand T ab, so dass eine zeitliche Folge von Abtastungen und damit Abstandsbildern entsteht.

Zur Verarbeitung der Rohdatenelemente bzw. Entfernungsbildpunkte weist der Laserscanner 10 eine Auswerteelektronik bzw. Datenverarbeitungseinrichtung 32 auf, die im Beispiel in dem Laserscanner 10 angeordnet ist, grundsätzlich aber auch davon abgesetzt angeordnet sein kann. Die Datenverarbeitungseinrichtung 32 weist unter anderem einen zur Ausführung eines Verfahrens nach einer bevorzugten Ausführungsform der Erfindung mit einem Computerprogramm nach einer bevorzugten Ausführungsform der Erfindung programmierten digitalen Signalprozessor, eine mit dem digitalen Signalprozessor verbundene Speichereinrichtung sowie Schnittstellen zur Ausgabe von Daten an eine in den Figuren nicht gezeigte Fahrzeugsteuerung auf.

Weiterhin ist mit der Datenverarbeitseinrichtung 32 eine Einrichtung zur Ermittlung eines Straßentyps verbunden, die eine in einer Speichereinrichtung gespeicherte digitale Karte und ein Positionsbestimmungssystem in Gestalt eines in den Figuren nicht gezeigten GPS-Empfängers aufweist.

Der Laserscanner 10 mit der Datenverarbeitungseinrichtung 32 bildet daher eine Vorrichtung zur Objektverfolgung nach einer bevorzugten Ausführungsform der Erfindung.

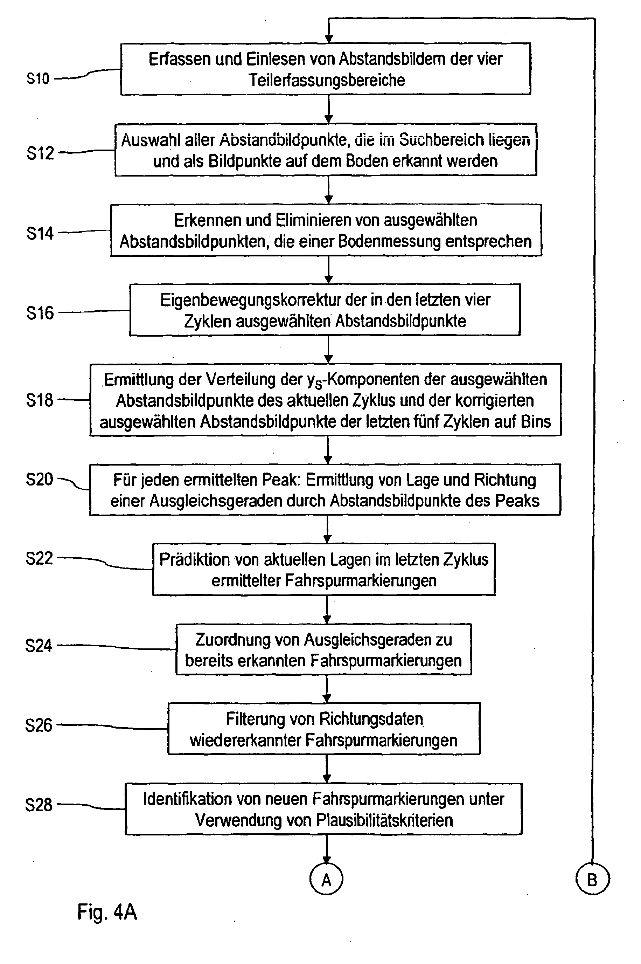

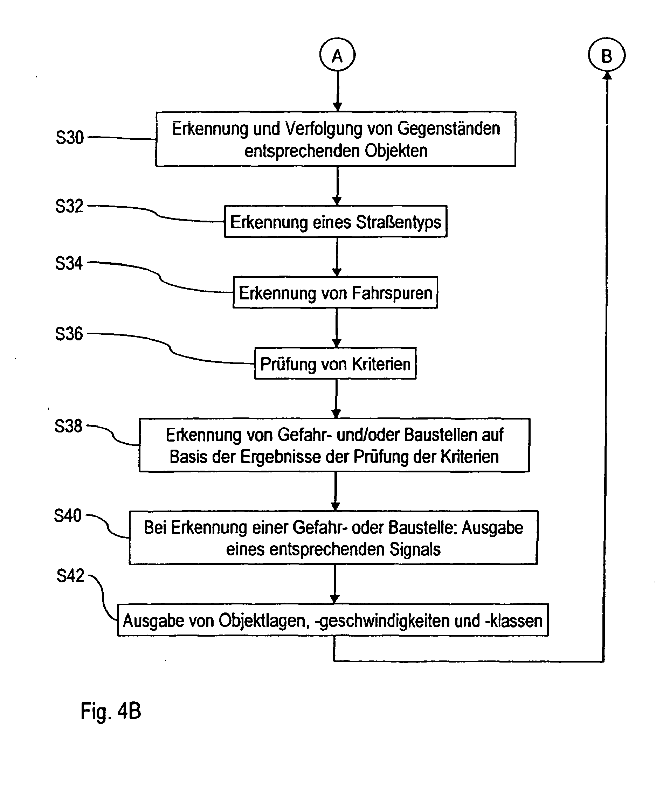

Ein Verfahren zur Erkennung von gekennzeichneten Gefahr- und/oder Baustellen nach einer bevorzugten Ausführungsform der Erfindung ist schematisch als Ablaufdiagramm in Fig. 4A und B veranschaulicht. Zur einfacheren Beschreibung werden die Abstandsbildpunkte im Folgenden nur als Bildpunkte bezeichnet.

Bei diesem Verfahren werden getrennt voneinander Fahrspurmarkierungen und Gegenstände in dem Erfassungsbereich des Laserscanners 10 mittels entsprechender Objektverfolgungen verfolgt. Gegenständen in dem Erfassungsbereich des Laserscanners 10 entsprechenden Objekten werden Objektklassen zugeordnet, die teilweise unter Verwendung wenigstens eines Parameterwertes eines dem Objekt zugeordneten Abstandsbildpunktes ermittelt werden. Dazu wird als Parameter für eine Echopulseigenschaft, die von der Echopulsenergie abhängt, die zuvor beschriebene Echopulsbreite verwendet.

Es wird davon ausgegangen, dass die Fahrspurmarkierungen nicht sehr stark gekrümmt sind und daher in einem schmalen zur Erkennung verwendeten Abstandsbereich näherungsweise entlang von Geraden verlaufen.

Das Verfahren wird in aufeinander folgenden Zyklen durchgeführt, wobei jeder Zyklus mit dem Schritt S 10 beginnt.

Zunächst wird in Schritt S 10 eines aktuellen Zyklus nach dem Erfassen eines neuen gebildeten Gesamtabstandsbildes einschließlich der den Bildpunkten des Gesamtabstandsbildes zugeordneten Echopulsbreitenwerte, das durch vier durch den Laserscanner 10 erfasste Abstandsbilder der einzelnen Teilerfassungsbereiche 24, 24', 24" und 24''' einschließlich den Abstandsbildpunkten der Abstandsbilder jeweils zugeordneten, aktuellen Echopulsbreitenwerten gebildet wird, dieses als aktuelles Gesamtabstandsbild mit den Echopulsbreitenwerten in die Datenverarbeitungseinrichtung 32 eingelesen. In diesem Gesamtabstandsbild werden die Bildpunkte der einzelnen Abstandsbilder nicht mehr unterschieden, sondern nur als Bildpunkte des Gesamtabstandsbildes behandelt. Soweit dies noch nicht geschehen ist, können die Koordinaten der Abstandsbildpunkte in das xs-ys-Sensorkoordinatensystem transformiert werden, wobei gleichzeitig eine Korrektur der Abstandsbildpunkte in Bezug auf eine Eigenbewegung des den Laserscanner 10 tragenden Fahrzeugs 12 erfolgen kann.

In diesem Schritt werden auc alle Echopulsbreitenwerte in Bezug auf den Abstand der Abstandsbildpunkte von dem Laserscanner 10 korrigiert, denen die Echopulsbreitenwerte jeweils zugeordnet sind. Zu diesem Zweck werden die korrigierten Echopulsbreitenwerte mit dem Quadrat des durch den jeweiligen Abstandsbildpunkt gegebenen Abstands des erfassten Gegenstandspunktes bzw. -bereichs von dem Laserscanner 10 multipliziert. Auf diese Weise werden korrigierte Echopulsbreitenwerte erhalten, die wenigstens näherungsweise keine durch unterschiedliche Abstände der entsprechenden Gegenstandspunkte bzw. -bereiche von dem Laserscanner 10 verursachten Veränderungen enthalten. Die Echopulsbreitenwerte werden dabei durch die korrigierten Echopulsbreitenwerte ersetzt.

In den Schritten S 12 bis S28 wird eine Erkennung von Fahrspurmarkierungen durchgeführt.

Danach wird in Schritt S30 auf der Basis der nicht zur Erkennung von Fahrspurmarkierungen verwendeten Bildpunkte des Gesamterfassungsbildes eine Objekterkennung und -verfolgung für Gegenständen in dem Erfassungsbereich entsprechende Objekte einschließlich einer Objektklassifizierung durch geführt.

In den Schritten S32 bis S40 erfolgt schließlich die eigentliche Erkennung von gekennzeichneten Gefahr- und/oder Baustellen.

In den Schritten S 12 und S 14 wird zunächst eine Menge von Bildpunkten gebildet, die Punkten bzw. Bereichen auf der Fahrbahnoberfläche 20 bzw. dem Boden entsprechen sollen. Als Elemente der Menge werden Abstandsbildpunkte nach mehreren Kriterien ausgewählt.

Zunächst werden als Elemente der Menge solche Bildpunkte des Gesamtabstandsbildes in Schritt S 10 ausgewählt, die unter Verwendung der den Bildpunkten des Gesamtabstandsbildes zugeordneten korrigierten Echopulsbreitenwerte und unter Verwendung eines entsprechenden Verfahrens zur Bodenerkennung als Punkten bzw. Bereichen auf dem Boden im Gesamterfassungsbereich 14 erkannt werden. Ein solches Verfahren zur Bodenerkennung ist in der am 23. August 2001 eingereichten deutschen Patentanmeldung der Anmelderin mit dem amtlichen Aktenzeichen DE 101 41 294 A1 und dem Titel "Verfahren zur Bodenerkennung" beschrieben, deren Inhalt hiermit durch Bezugnahme in die Beschreibung aufgenommen wird.

Weiterhin werden nur solche Bildpunkte ausgewählt, die das zusätzliche Kriterium erfüllen, dass deren Abstände von einer vorgegebenen Bezugskurve, quer zur Längsrichtung des Fahrzeugs 12, im Beispiel von einer durch die ys-Achse gegebenen Bezugsgeraden, innerhalb eines vorgegebenen Abstandsintervalls liegen. Genauer werden nur solche Bildpunkte ausgewählt, deren Komponenten der Lagen entlang der Längsrichtung L des Fahrzeugs 12, d.h. in xs-Richtung, Werte oberhalb eines unteren Grenzwertes von 10 m und unterhalb eines oberen Grenzwertes von 20 m, d.h. zwischen 10 m und 20 m, annehmen. Hierdurch werden nur solche Bildpunkte berücksichtigt, die auf der Oberfläche 20 des Fahrbahnabschnitts 26 liegen, auch wenn das Fahrzeug 12 Nickbewegungen ausführt, bei denen die Erfassungsbereiche 24, 24', 24" und 24''' relativ zu der Fahrbahnoberfläche 20 geschwenkt werden.

Es soll vermieden werden, dass Bildpunkte zur Ermittlung der Fahrspurmarkierung verwendet werden, die quer zur Längsrichtung L des Fahrzeugs 12 entlang einer Kurve angeordnet sind, entlang derer sich der Mittelstrahl des Laserstrahlungsbündels 28 bewegt, im Beispiel im Bereich nahe der Längsachse des Fahrzeugs 12 näherungsweise entlang einer Geraden, , aber nicht von Fahrspurmarkierungen in Fahrtrichtung bzw. Längsrichtung L des Fahrzeugs 12, sondern anderen Bereichen zurückgeworfen wurden. Diese Abstandsbildpunkte können bei einer Nickbewegung des Fahrzeugs 12 bei einer Messung auf die Fahrbahnoberfläche 20 auftreten. Dazu werden in Schritt S 14 entlang einer Geraden quer zu der Längsrichtung L des Fahrzeugs 12 angeordnete, bisher ausgewählte Bildpunkte aus der Menge der ausgewählten Bildpunkte eliminiert. Hierzu kann die Verteilung der Komponenten der auf der Basis der bereits genannten Kriterien ausgewählten Bildpunkte in Längsrichtung des Fahrzeugs 12 bzw. der Projektionen dieser Bildpunkte auf die Längsrichtung L, d.h. der xs-Komponenten, untersucht werden. Häufungen der Komponenten bzw. projizierten Bildpunkte, d.h. Peaks bzw. Spitzen der Verteilung, entsprechen dabei Bildpunkten, die entlang einer quer zur Längsrichtung L verlaufenden Geraden liegen.

Zur Ermittlung der Verteilung und der Peaks bzw. Häufungen wird der Bereich der koaxial mit der Längsrichtung L verlaufenden xs-Achse zwischen 10 m und 20 m in aneinander angrenzende Intervalle mit einer Länge von etwa 30 cm aufgeteilt. Zum Auffinden der Peaks der Verteilung wird dann für jedes Intervall die Anzahl der bisher ausgewählten Bildpunkte ermittelt, deren xₛ-Komponenten in dem Intervall liegen. Es werden dann relative Maxima sowie das absolute Maximum der Verteilung ermittelt, die dann die Lagen der jeweiligen Peaks bestimmen. Alle relativen Maxima der Verteilung, die einer Anzahl größer als eine vorgegebene Mindestanzahl, im Beispiel 10 Bildpunkte, entsprechen, und deren Wert einen Mindestanteil von im Beispiel wenigstens 40% des absoluten Maximums überschreitet, werden als Geraden entsprechend angesehen, die quer zu Längsrichtung L des Fahrzeugs 12 verlaufen. Die den Peaks um die Maxima entsprechenden Bildpunkte werden dann nicht als ausgewählte Bildpunkte behandelt bzw. aus der Menge der ausgewählten Bildpunkte eliminiert.

Die verbliebenen, so ausgewählten Abstandsbildpunkte werden dann zur Verwendung in den nächsten vier Zyklen abgespeichert.

In Schritt S 16 werden für die in den letzten vier vorhergehenden Zyklen ausgewählten Bildpunkte Eigenbewegungskorrekturen in Bezug auf Drehbewegungen des Fahrzeugs 12 durchgeführt, bei denen die Bildpunkte jeweils um einen Winkel um den Ursprung des Sensorkoordinatensystems gedreht werden, der dem Negativen des Winkels entspricht, der sich aus der Giergeschwindigkeit des Fahrzeugs 12 und der Dauer eines Zyklus bzw. der Zeit T ergibt. Die Giergeschwindigkeit kann dabei beispielsweise von einem Giergeschwindigkeitssensor des Fahrzeugs 12 oder durch eine Eigenbewegungsbestimmung auf der Basis von zeitlichen Folgen von Abstandsbildern ermittelt werden. Nach dieser Korrektur haben die ausgewählten Bildpunkte der letzten vier Zyklen in Bezug auf Drehungen wenigstens näherungsweise korrekte Koordinaten in dem aktuellen xs-ys-Koordinatensystem und sind so mit den aktuellen ausgewählten Bildpunkten zusammen verarbeitbar. Die korrigierten Koordinaten werden zur Verwendung in den nächsten Zyklen statt der bisherigen Koordinaten abgespeichert.

In den folgenden Schritten werden die in den Schritten S 12 und S 14 erhaltenen, ausgewählten Bildpunkte des aktuellen Zyklus und die in Schritt S 16 korrigierten ausgewählten Bildpunkte der letzten vier Zyklen gemeinsam und ohne Unterschied verarbeitet, d.h. anschaulich in einer graphischen Darstellung in dem xs-ys-Koordinatensystem überlagert. Alle diese Bildpunkte werden im Folgenden einfach als ausgewählte Bildpunkte der fünf Zyklen bezeichnet.

In den Schritten S 18 und S20 werden aus den ausgewählten Bildpunkten der fünf Zyklen Geraden, die Fahrspurmarkierungen entsprechen könnten, bzw. diese Geraden bestimmende Parameterwerte ermittelt. Dabei wird ausgenutzt, dass in dem Abstandsbereich von 10 m bis 20 m die meisten Fahrspurmarkierungen in guter Näherung als Geraden approximierbar sind.

Zur Ermittlung der der Abstandsbildpunkte, die Fahrspurmarkierungen entsprechen können, werden in Schritt S 18 Maxima in der Verteilung der Komponenten der ausgewählten Abstandsbildpunkte der fünf Zyklen in einer Richtung parallel zu einer Ermittlungskurve, im Beispiel einer Geraden quer zur Längsrichtung L des Fahrzeugs 12, d.h. deren Projektion auf die ys-Achse gesucht. Diese Maxima sollten Fahrspurmarkierungen entsprechen, die näherungsweise quer zu der Längsachse L des Fahrzeugs verlaufen.

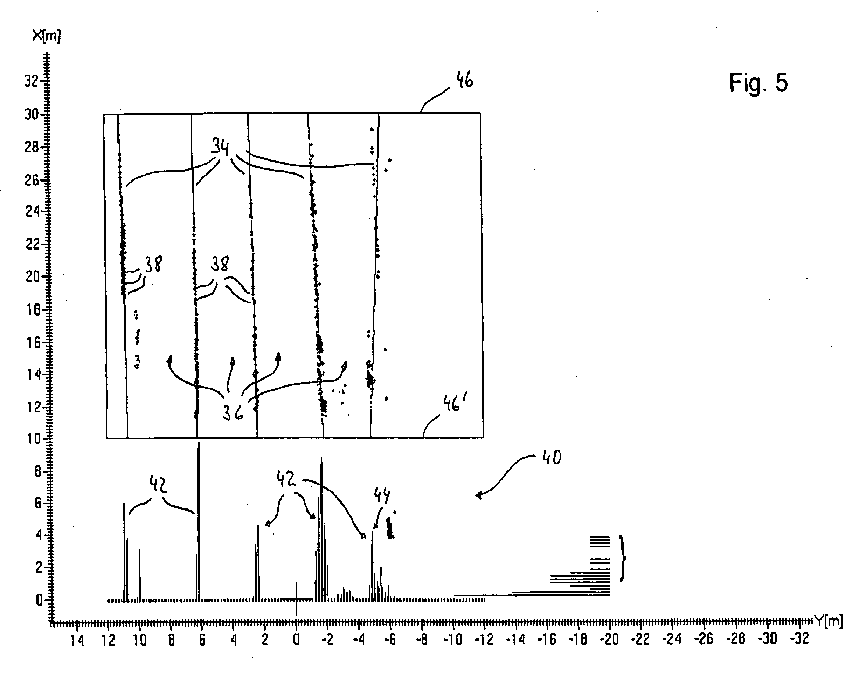

Dies ist in Fig. 5 veranschaulicht, in der entlang von Geraden 34 angeordnete, Fahrspuren 36 entsprechende, ausgewählte Bildpunkte 38 eines Ausschnitts eines Gesamtabstandsbildes in dem xₛ-yₛ-Sensorkoordinatensystem gezeigt sind.

Hierzu wird die ys-Achse in aneinandergrenzende Intervalle aufgeteilt, die in der Statistik oft auch als Bins bezeichnet werden und deren Breite insbesondere in Abhängigkeit von dem Auflösungsvermögen des Laserscanners 10 für Gegenstandspunkte im Bereich von 10 m bis 20 m parallel zu der Längsrichtung L des Fahrzeugs 12 vor diesem gewählt ist. Im Beispiel beträgt die Breite etwa 30 cm.

Es werden dann für alle Intervalle die Anzahlen der Bildpunkte bestimmt, deren ys-Koordinaten bzw. -komponenten innerhalb des jeweiligen Intervalls liegen.

In einer graphischen Darstellung ergibt sich ein in Fig. 5 gezeigtes Histogramm 40, das klare Peaks bzw. relative Maxima 42 bei den Fahrspurmarkierungen entsprechenden Geraden 34 zeigt.

Die Maxima können mit verschiedenen Verfahren ermittelt werden, wobei eine Trennung von Rauschen bzw. nicht Fahrspurmarkierungen entsprechenden Abstandsbildpunkten erfolgen sollte. In diesem Ausführungsbeispiel werden zur Ermittlung der Maxima zunächst diejenigen Intervalle gesucht, in die die ys-Komponenten einer größeren Anzahl von Bildpunkten fallen, als in die beiden jeweils benachbarten Intervalle. Zur Unterscheidung dieser relativen Maxima 42 von nur durch Rauschen verursachten relativen Maxima werden nur solche relativen Maxima berücksichtigt, deren Höhe größer ist, als ein vorgegebener Anteil des absoluten Maximums der Verteilung, im Beispiel 30%.

Für jedes relative Maximum einschließlich des absoluten Maximums werden dann jeweils alle Bildpunkte in dem Peak bestimmt, der das Intervall mit dem jeweiligen relativen Maximum umfasst. Dazu werden jeweils ausgehend von dem Intervall mit dem relativen Maximum alle direkt aufeinanderfolgenden Intervalle bestimmt, deren Anzahlen der jeweils in diese fallenden Projektionen der Bildpunkte bzw. ys-Komponenten den vorgegebenen Anteil des absoluten Maximums überschreiten. Alle Bildpunkte, deren ys-Komponenten in diesen Intervallen liegen, d.h. alle dem Peak zugerechneten Bildpunkte werden als einer Geraden entsprechend angesehen.

In Fig. 5 sind die Anzahlen in den Intervallen rechts und links des Intervalls mit dem relativen Maximum 44 rechts neben dem Histogramm 40 durch Strecken veranschaulicht, deren Länge jeweils der Anzahl der Bildpunkte für das Intervall entspricht. Die durch die geschweifte Klammer bezeichneten Strecken bzw. entsprechenden Intervalle bzw. genauer die diesen entsprechenden Bildpunkte der fünf Zyklen werden dem Peak mit dem relativen Maximum 44 zugeordnet.

Für jeden der Peaks wird dann in Schritt S20 für die diesen zugeordneten Bildpunkte eine lineare Regression durchgeführt, bei der eine Steigung und ein ys-Achsenabschnitt, d.h. der Schnittpunkt einer Regressionsgeraden mit der ys-Achse, ermittelt und abgespeichert werden, die eine entsprechende Gerade definieren.

Weiterhin wird die Streuung der zur linearen Regression verwendeten Bildpunkte um die Gerade bzw. die Standardabweichung der linearen Regression ermittelt. Diese kann als Schätzung für die Breite der Fahrspurmarkierung verwendet werden.

In einem anderen Ausführungsbeispiel wird, sobald verfügbar, als Ermittlungskurve eine parallel zu den gemittelten Richtungen der in dem letzten Zyklus erkannten Fahrspurmarkierungen verlaufende Gerade verwendet.

Die so ermittelten Geraden können Fahrspurmarkierungen entsprechen, jedoch können in Ausnahmesituationen auch Geraden ermittelt werden, die nicht Fahrspurmarkierungen entsprechen. Daher wird in den Schritten S22 bis S28 eine Erkennung und Verfolgung von Fahrspurmarkierungen ausgeführt, die vorteilhaft aber für das erfindungsgemäße Verfahren nicht zwingend notwendig ist.

Dazu werden die Daten in dem letzten Zyklus ermittelter Fahrspurmarkierungen gespeichert.

Die Fahrspurmarkierungen und die entsprechenden Objekte des Verfolgungsverfahrens werden im Folgenden der Einfachheit halber terminologisch nicht auseinander gehalten.

In Schritt S22 werden als Vorhersage der Lagen der Fahrspurmarkierungen im aktuellen Zyklus Geraden verwendet, die durch die gespeicherten Steigungen und ys-Achsenabschnitte aller derjenigen Geraden im letzten Zyklus gegeben sind, die als Fahrspurmarkierungen entsprechend erkannt wurden.

Als Suchbereich für mögliche zu erwartende Lagen der Fahrspurmarkierungen bzw. im aktuellen Zyklus werden dann jeweils Intervallpaare auf zu der ys-Achse parallelen Hilfsachsen 46 und 46' im Abstand von 10 m und 20 m von der ys-Achse ermittelt, in denen eine der aktuell ermittelten Geraden diese Hilfsachsen 46, 46' schneiden muss, wenn diese der entsprechenden bereits erkannten Fahrspurmarkierung entsprechen soll. Diese Intervalle weisen im Beispiel eine Breite von 1 m auf, wobei ihr Mittelpunkt jeweils als Schnittpunkt einer durch die gespeicherte Steigung und den gespeicherten ys-Achsenabschnitt definierten Geraden mit jeweils einer der Hilfsachsen 46, 46' ermittelt wird. Diese Intervalle dienen als Vorhersage der Lage der Fahrspurmarkierungen bzw. entsprechender Objekte im aktuellen Zyklus.

Zur Zuordnung von ermittelten Geraden bzw. entsprechenden Bildpunkten zu bereits erkannten Fahrspurmarkierungen wird in Schritt S24 für jede ermittelte Gerade jeweils für alle Fahrspurmarkierungen des letzten Zyklus, d.h. alle Intervallpaare geprüft, ob eine in den Schritten S 18 und S20 neu ermittelte Gerade die beiden Hilfsachsen in beiden Intervallen eines Intervallpaars schneidet. Ist dies der Fall, so wird die neue Gerade als entsprechende Fahrspurmarkierung wiedererkannt.

Nachdem diese Prüfung und gegebenenfalls die Zuordnung für alle in den Schritten S 18 und S20 ermittelten Geraden durchgeführt wurde, werden in Schritt S26 die neu ermittelten Steigungen mittels eines Kalman-Filters gefiltert und der gefilterte Wert zur Ermittlung von Intervallpaaren im nächsten Zyklus gespeichert. Entsprechendes erfolgt für die ys-Achsenabschnitte. Es ergeben sich so geschätzte Lagen der Fahrspurmarkierungen im aktuellen Zyklus.

In Schritt S28 wird geprüft, welche der in Schritt S24 noch nicht einer Fahrspurmarkierung zugeordneten Geraden bzw. entsprechenden ausgewählten Bildpunkte der fünf Zyklen einer neuen Fahrspurmarkierung entsprechen könnte. Hierzu werden Plausibilitätskriterien verwendet. Beispielsweise kann als Plausibilitätskriterium verwendet werden, dass entlang einer Geraden angeordnete Bildpunkte nur dann einer Fahrspurmarkierung entsprechen, wenn diese Gerade mit wiedererkannten Fahrspuren einen Winkel einschließt, dessen Betrag kleiner als ein vorgegebener Grenzwinkel von beispielsweise 20° ist.

Die Steigungen und ys-Achsenabschnitte von so als jeweils einer Fahrspurmarkierung entsprechend erkannten Geraden werden dann als Daten für geschätzte Lagen der Fahrspurmarkierungen abgespeichert, wobei entsprechende Kalman-Filter initialisiert werden.

Auf der Basis der nicht zur Fahrspurerkennung verwendeten Abstandsbildpunkte, die im folgenden als verbleibendes Abstandsbild bezeichnet werden, wird dann in Schritt S30 eine konventionelle Objektverfolgung durchgeführt, wie sie, bis auf die Klassifizierung, beispielsweise in der in der Reihe Fortschritts-Berichte, Sachgebiet: Verkehrstechnik/Fahrzeugtechnik, Band Nr. 438 veröffentlichten Dissertation von Kirchner, Alexander mit dem Titel "Sensordatenverarbeitung eines Laserscanners für autonome Fahrfunktionen von Kraftfahrzeugen", Hamburg, 2000, ISBN: 3-18-343812-7, ISSN: 0178-9449 genauer beschrieben ist, deren Inhalt hiermit durch Bezugnahme in die Beschreibung aufgenommen wird. Objekte werden dabei jeweils durch einen Bezugspunkt, beispielsweise ihren geometrischen Schwerpunkt, bzw. dessen Lage, ihre Länge und Breite sowie die Geschwindigkeit des Bezugspunkts als Zustandsvariablen beschrieben. Zur Objektverfolgung werden Kalman-Filter verwendet.

Kurz zusammengefasst wird das verbleibende Abstandsbild unter Verwendung eines Segmentierungskriteriums in Bezug auf den Abstand von jeweils zwei Abstandsbildpunkten voneinander unter Bildung von Segmenten segmentiert. Dann werden jedem Objekt, das aus einem vorhergehenden Zyklus bekannt ist, auf der Basis einer prädizierten Lage des Objekts für den aktuellen Zyklus Segmente zugeordnet, die sich in einem vorgegebenen Suchbereich um die prädizierte Lage des Objekts bzw. dessen Bezugspunkt befinden. Aus nicht zugeordneten Segmenten werden schließlich neue Objekte gebildet und es werden Kalman-Filter für diese initialisiert. In einem folgenden Schritt werden für alle Objekte auf der Basis der diesen über die Segmente zugeordneten Abstandsbildpunkte neue Lagen der Objekte bzw. der Bezugspunkte der Objekte in dem aktuellen Zyklus ermittelt. Für bereits aus einem vorhergehenden Zyklus bekannte Objekte werden weiterhin Geschwindigkeiten geschätzt. Auf der Basis der ermittelten Lagen werden dann prädizierten Lagen der Bezugspunkte für den folgenden Zyklus ermittelt.

Nach der Neubildung eines Objekts wird diesem eine Objektklasse in Abhängigkeit von der Ausdehnung des Objekts und der Größe des größten, einem der Abstandsbildpunkte des Objekts zugeordneten, in Schritt S 10 korrigierten Echopulsbreitenwertes zugeordnet. Im Beispiel wird in Bezug auf die in Schritt S 10 korrigierten Echopulsbreitenwerte das Objektklassifizierungskriterium überprüft, ob diese eine Mindestechopulsenergie überschreiten. Die Mindestechopulsbreite ist so bestimmt, dass von Reflektoren, wie zum Beispiel Rückstrahlern in Heckleuchten von Kraftfahrzeugen, Kraftfahrzeugkennzeichen sowie Reflektoren an den Leitpfosten am Fahrbahnrand oder an Warnbaken zurückgeworfene Echopulse einen über der Mindestechopulsbreite liegenden, korrigierten Echopulsbreitenwert aufweisen, während nur diffus von sonstigen Oberflächen auf Gegenständen zurückgeworfene Echopulse aufgrund ihrer niedrigeren von dem Empfangselement empfangenen Echopulsenergie einen korrigierten Echopulsbreitenwert unterhalb der Mindestechopulsbreite aufweisen.

Zur einfacheren Darstellung sind in dem Beispiel nur wenige Objektklassen vorgegeben. Genauer sind Objektklassen für zweispurige Fahrzeuge wie beispielsweise Personenkraftwagen, Lastkraftwagen und Busse, für Leitpfosten zur Kennzeichnung eines normalen Fahrbahnverlaufs und Warnbaken zur Kennzeichnung geänderten Fahrspurverlaufs und für sonstige Gegenstände, zu denen der Einfachheit halber auch Fußgänger gezählt werden, bzw. für die entsprechenden Objekte vorgesehen. Die Objektklassen sind jeweils durch Zuordnungskriterien festgelegt. Ein Objekt wird einer Objektklasse nur dann zugeordnet, wenn es alle Zuordnungskriterien für die Objektklasse erfüllt.

Ein Objekt fällt in die Objektklasse für zweispurige Fahrzeuge, wenn es die folgenden Zuordnungskriterien erfüllt: Es besitzt eine Länge zwischen 2,5 m und 20 m und eine Breite zwischen 1,5 m und 2,5 m und wenigstens einen korrigierten Echopulsbreitenwert, der die Mindestechopulsbreite übersteigt. Ist nur eine Seite sichtbar, wird als Zuordnungskriterium verwendet, dass das Objekt eine Seite mit einer Länge zwischen 2,5 m und 20 m aufweist oder dass es eine Seite mit einer Breite zwischen 1,5 m und 2,5 m besitzt und wenigstens einen korrigierten Echopulsbreitenwert, der die Mindestechopulsbreite übersteigt.

Der dem korrigierten Echopulsbreitenwert entsprechende Bereich auf der Kontur des Kraftfahrzeugs kann dabei dem Kraftfahrzeugkennzeichen oder einem Rückstrahler entsprechen.

Ein Objekt fällt in die Objektklasse für Leitpfosten oder Warnbaken, wenn es die zwei folgenden Zuordnungskriterien erfüllt: Es weist eine maximale Ausdehnung, gegeben durch die Länge der längsten Seite des kleinsten Rechtecks, das den Querschnitt des Leitpfostens oder der Warnbake bzw. die für diesen erfassten Abstandsbildpunkte umschließt, von 60 cm, oder nur einen einzelnen Bildpunkt auf. Wenigstens einem Abstandsbildpunkt ist ein die Mindestechopulsbreite übersteigender Echopulsbreitenwert zugeordnet. Das zweite Zuordnungskriterium basiert darauf, dass Leitpfosten wie auch Warnbaken Retroreflektoren aufweisen.

Ein Objekt fällt in die Objektklasse für sonstige Objekte, falls es in keine der Objektklassen für zweispurige Fahrzeuge oder Leitpfosten fällt.

Zur Klassifizierung wird daher zunächst ein Schwellwert für die Echopulsbreite gesetzt, der einer Mindestechopulsenergie entspricht, die ein von einem der Reflektoren zurückgeworfener Echopuls wenigstens aufweist. Dann werden beginnend mit den Klassifizierungskriterien für zweispurige Fahrzeuge die Klassifizierungskriterien für die anderen Objektklassen geprüft und entsprechende Objektklassen zugeordnet.

In Schritt S32 wird mittels der Einrichtung zur Erkennung eines Straßentyps zunächst eine Position des Fahrzeugs 12 und damit des Laserscanners 10 und hieraus mittels der digitalen Karte der Typ der Straße ermittelt, auf der sich das Fahrzeug 12 befindet.

In Schritt S34 wird dann auf der Basis der ermittelten Fahrspurmarkierungen und gegebenenfalls auf der Basis vorhandener Warnbaken und deren Anordnung eine Fahrspurerkennung durchgeführt.

Eine Fahrspur wird nur erkannt, wenn zwei benachbarte Fahrspurmarkierungen näherungsweise parallel verlaufen, d.h. die entsprechenden Geraden einen Winkel von weniger als beispielsweise 5° einschließen, und einen mittleren Abstand aufweisen, der innerhalb eines Abstandsintervalls liegt, das durch den Straßentyp und entsprechende Vorgaben des deutschen Straßenverkehrsrechts festgelegt ist.

Weiterhin wird verwendet, dass nur bestimmte Kombinationen von Fahrspuren auftreten können. Schließlich kann noch die Breite der Fahrspurmarkierungen verwertet werden, die sich aus der Streuung der entlang einer einer Fahrspurmarkierung entsprechenden Geraden angeordneten Bildpunkte um diese Gerade entspricht. Aus den Lagen und Richtungen der ermittelten Fahrspurmarkierungen können so die Lagen und Richtungen der entsprechenden Fahrspuren ermittelt werden.

In Abhängigkeit davon, ob eine eindeutige Fahrspurerkennung möglich war, oder nicht, wird eine entsprechende logische Variabel auf den Wert "0" oder "1" gesetzt.

Die Lagen und Richtungen erkannter Fahrspurmarkierungen werden abgespeichert.

Hat die logische Variable in Bezug auf die Fahrspurerkennung den Wert "0", d.h. konnten Fahrspuren eindeutig erkannt werden, werden in Schritt S34 die Lagen und Richtungen der ermittelten Fahrspuren und/oder Fahrspurmarkierungen und gegebenenfalls die Klasse der Straße zur Verwendung durch andere Programme oder Einrichtungen gespeichert bzw. ausgegeben.

In Schritt S36 erfolgt dann eine Prüfung von Kriterien für die Erkennung einer gekennzeichneten Gefahr- und/oder Baustelle. Für jedes Kriterium wird der Wert einer entsprechenden logischen Variable auf den Wert "1" gesetzt, falls das Kriterium erfüllt ist, sonst auf den Wert "0".

Es wird das Kriterium geprüft, ob erkannte Fahrspurmarkierungen einen eindeutigen Verlauf von Fahrspuren definieren. Dieses Kriterium wurde bereits in Schritt S34 geprüft.

Hat die logische Variable für die Erkennung von Fahrspuren den Wert "0", wird weiterhin das Kriterium geprüft, ob erkannte Fahrspuren eine durch den Typ der Straße vorgegebene Mindestbreite aufweisen. Dieser wurde bereits in Schritt S32 ermittelt. Die Mindestbreiten sind durch die Straßenverkehrsordnung bestimmt und in einer Tabelle in einem nichtflüchtigen Speicher der Datenverarbeitungseinrichtung 32 abgelegt.

Darüber hinaus wird die Änderung der Richtungen von Fahrspurmarkierungen über mehrere Zyklen analysiert und hieraus ein Krümmungsradius der entsprechenden Fahrspuren ermittelt. Dann wird das Kriterium überprüft, ob der ermittelte Krümmungsradius einen für den Typ der Straße zulässigen Minimalradius unterschreitet. Die Minimalradien für gegebene Straßentypen sind durch die Straßenverkehrsordnung bestimmt und in einer Tabelle in dem nichtflüchtigen Speicher der Datenverarbeitungseinrichtung 32 abgelegt.

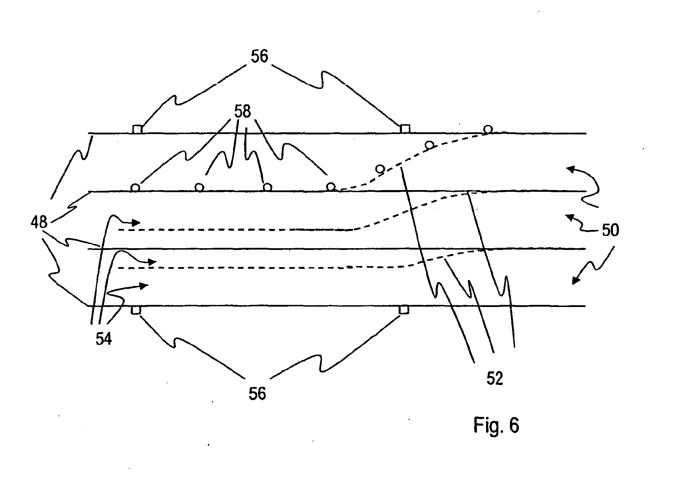

Weiterhin wird auf der Basis der ermittelten Änderung der Richtungen von Fahrspurmarkierungen das Kriterium überprüft, ob ein Versatz oder eine Verjüngung wenigstens einer Fahrspur oder der Fahrbahn erkannt wird. Eine entsprechende Situation ist in Fig. 6 gezeigt, in der eine von drei durch normale, permanente Fahrspurmarkierungen 48 definierten, normalen Fahrspuren 50 auf einer Autobahn instand gesetzt werden muss. Dazu werden provisorische Fahrspurmarkierungen 52 auf die Fahrbahn aufgebracht, die provisorische Fahrspuren 54 definieren, von denen zwei im Bereich nach dem Abknicken gegenüber den vorhergehenden normalen Fahrspurabschnitten aus denen sie hervorgegangen sind versetzt sind. Weiterhin sind alle provisorischen Fahrspuren 54 in ihrer Breite reduziert. In Fig. 6 sind nur zur Unterscheidung die provisorischen Fahrspurmarkierungen 52 gestrichelt und die normalen Fahrspurmarkierungen 48 als durchgezogene Linien gezeichnet, was jedoch nicht bedeutet, dass diese auf der Fahrbahn auch tatsächlich durch fortlaufende oder unterbrochenen Fahrspurmarkierungen gegeben sein müssen. Zur Ermittlung des Versatzes und der Verjüngung werden Daten in Bezug auf die Lagen und Breiten der Fahrspuren in vorhergehenden Zyklen herangezogen.

Bei Vorliegen eines Versatzes kann weiterhin geprüft werden, ob dieser im Widerspruch zu einem mittels der digitalen Karte ermittelten Verlauf steht.

Weiterhin wird das Kriterium überprüft, ob eine in vorhergehenden Zyklen erkannte Fahrspur endet.

Darüber hinaus wird das Kriterium geprüft, ob die Position des Sensors bzw. Laserscanners 10 einer zu erwartenden Position auf der Straße entspricht. Darüber hinaus wird die Fahrtrichtung geprüft. Als weiteres Kriterium wird daher geprüft, ob sich der Laserscanner 10 bzw. das Fahrzeug 12 auf einer Straße befindet, die eine Fahrbahn aufweist, die für Verkehr in nur einer Richtung vorgesehen ist, und ob sich der Laserscanner 10 bzw. das Fahrzeug 12 auf dieser Fahrbahn befindet und/oder entgegen der vorgesehenen Fahrtrichtung bewegt. Hierzu können insbesondere die in Schritt S34 ermittelte Position und der Straßentyp verwendet werden.

Auf der Basis der Objektverfolgung in Schritt S30 sind Geschwindigkeiten von anderen Fahrzeugen auf der Fahrbahn bekannt. Als Kriterium wird dann weiter geprüft, ob die ermittelten Geschwindigkeiten ein Geschwindigkeitskriterium für das Vorliegen einer Gefahr- und/oder Baustelle erfüllen. Hierzu sind für mögliche Straßentypen typische Mindestgeschwindigkeiten in Form einer Tabelle in dem nichtflüchtigen Speicher gespeichert. Anhand des in Schritt S32 ermittelten Straßentyps wird eine entsprechende Mindestgeschwindigkeit ermittelt, mit der die Objektgeschwindigkeiten von anderen Fahrzeugen entsprechenden Objekten verglichen werden. Unterschreiten die Objektgeschwindigkeiten die Mindestgeschwindigkeiten, ist das Kriterium erfüllt.

Darüber hinaus wird das Kriterium geprüft, ob wenigstens ein eine Gefahr- und/oder Baustelle kennzeichnender Gegenstand oder eine vorgegebenen Anordnung solcher Gegenstände erkannt wurde. Hierzu werden die Lagen von Leitpfosten und Warnbaken analysiert, die sich durch die Abstände voneinander unterscheiden, in denen sie aufgestellt sind. Dies ist in Fig. 6 für die Leitpfosten 56 und die Warnbaken 58 gezeigt. Die Leitpfosten 56 sind in durch den Straßentyp bestimmten Abständen aufgestellt, die Warnbaken 58 in geringeren Abständen. In dem nichtflüchtigen Speicher sind in einer Tabelle für mögliche Straßentypen die durch die Straßenverkehrsordnung vorgegebenen Abstände von Leitpfosten in Abhängigkeit von dem Straßentyp abgespeichert. Mittels des in Schritt S32 ermittelten Straßentyps wird der Mindestabstand von Leitpfosten ermittelt. Entlang einer Geraden oder einer nur schwach gekrümmten Linie angeordnete Objekte der Klasse Leitpfosten oder Warnbaken werden als Warnbaken angesehen, wenn deren Abstände voneinander den Mindestabstand unterschreiten. Bei Erkennung von Warnbaken, die als eine Gefahr- und/oder Baustelle kennzeichnende Gegenstände gelten, ist das Kriterium erfüllt.

Weiterhin wird als Kriterium überprüft, ob ein Objekt erkannt wurde, das entsprechend einem ermittelten Straßentyp nicht in dem Bereich der potentiellen Gefahr- und/oder Baustelle und/oder der Fahrbahn oder dem Erfassungsbereich vorhanden sein dürfte. Im Beispiel wird nach sonstigen Objekten auf der Fahrbahn gesucht. Wird ein solches Objekt gefunden wird dies als Indiz für das Vorliegen einer Baustelle gewertet.

Schließlich wird das Kriterium geprüft, ob auf einer Fahrbahn ein Fahrzeug steht, das an seinem Heck einen für Sicherungsfahrzeuge charakteristischen Verlauf von korrigierten Echopulsbreitenwerten aufweist.

In Schritt S38 werden dann die Ergebnisse der Prüfung der Kriterien ausgewertet. Sind alle Kriterien vorgegebener Kombinationen von Kriterien erfüllt, wird auf ein Vorliegen einer gekennzeichneten Gefahr- und/oder Baustelle geschlossen.

Wird beispielsweise ein Wegfall einer Fahrspur in Kombination damit, dass Fahrspuren nicht eindeutig erkennbar sind, erkannt, wird auf das Vorliegen einer Baustellen geschlossen.

Gleiches gilt, wenn beispielsweise ein Versatz der Fahrspur in Kombination mit einer Position auf der Gegenfahrbahn erkannt wird.

Eine Baustelle wird weiterhin erkannt, wenn eine Unterschreitung der minimalen Fahrspurbreite, eine Unterschreitung des minimalen Krümmungsradius der Fahrspur oder ein Versatz der Fahrspuren im Widerspruch zu dem Verlauf gemäß der digitalen Karte auftreten.

Eine Baustelle wird darüber hinaus erkannt, wenn Gefahr- oder Baustellen kennzeichnende Gegenstände wie Warnbaken erkannt werden und gleichzeitig ein Versatz oder eine Verjüngung von Fahrspuren auftritt (vgl. Fig. 6).

Weitere Kombinationen von Kriterien, die als hinreichend für das Vorliegen einer gekennzeichneten Gefahr- und/oder Baustelle angenommen werden, sind möglich.

Je nach Ergebnis der Erkennung wird in Schritt S40 ein entsprechendes Signal an eine entsprechende Auswerteeinrichtung oder Fahrzeugsteuereinrichtung ausgegeben.

In Schritt S42 werden die ermittelten Objektlagen und -geschwindigkeiten sowie die Objektklassen für die in dem aktuellen Zyklus erkannten Objekte zur weiteren Verwendung ausgegeben bzw. gespeichert.

Das Verfahren kann dann in einem neuen Zyklus mit Schritt S 10 fortgesetzt werden.

### Bezugszeichenliste

- 10: Laserscanner
- 12: Fahrzeug
- 14: Gesamterfassungsbereich
- 16: Gegenstand
- 18: Fahrspurmarkierungen
- 20: Oberfläche
- 22: Fahrbahn
- 23, 23', 23": Fahrspuren
- 24, 24', 24", 24''': Erfassungsbereiche
- 26, 26': Fahrbahnabschnitte
- 28: Laserstrahlungsbündel
- 30, 30': Gegenstandspunkte
- 32: Datenverarbeitungseinrichtung
- 34: Geraden
- 36: Fahrspuren
- 38: ausgewählte Abstandsbildpunkte
- 40: Histogramm
- 42: relative Maxima
- 44: relatives Maximum
- 46, 46': Hilfsachsen
- 48: Fahrspurmakierungen
- 50: Fahrspuren
- 52: Fahrspurmarkierungen
- 54: Fahrspuren
- 56: Leitpfosten
- 58: Warnbaken

## Patentansprüche

1. Verfahren zur Erkennung von gekennzeichneten Gefahr- und/oder Baustellen im Bereich von Fahrbahnen (22), bei dem
- Abstandsbilder eines Erfassungsbereichs (14) eines an einem Fahrzeug (12) gehaltenen Sensors (10) für elektromagnetische Strahlung, insbesondere eines Laserscanners, verwendet werden,
- in den Abstandsbildern nach Kennzeichen (52, 58) für **gekennzeichnete** Gefahr- und/oder Baustellen gesucht wird,
- ein Typ einer die Fahrbahn umfassenden Straße (22) ermittelt wird, und
- geprüft wird, ob wenigstens ein Kriterium in Bezug auf Kennzeichen für **gekennzeichnet**e Gefahr- und/oder Baustellen erfüllt ist,
**dadurch gekennzeichnet,**
**dass** geprüft wird, ob Pylone oder Baken erkannt wurden, die einen durch den ermittelten Straßentyp vorgegebenen Mindestabstand von Leitpfosten voneinander unterschreiten.

2. Verfahren nach Anspruch 1,
**dadurch gekennzeichnet,**
**dass** auf der Basis der Abstandsbilder als Kennzeichen Markierungen (18, 48, 52) auf einer Fahrbahn (22) erkannt werden.

3. Verfahren nach Anspruch 2,
**dadurch gekennzeichnet,**
**dass** in den Abstandsbildern als Kennzeichen Fahrspurmarkierungen (18, 48, 52) gesucht werden, und
**dass** die Lage und/oder der Verlauf und/oder wenigstens eine Eigenschaft der Fahrspurmarkierungen (18, 48, 52) zur Erkennung der Gefahr- und/oder Baustelle verwendet wird.

4. Verfahren nach einem der vorhergehenden Ansprüche,
**dadurch gekennzeichnet,**
**dass** in den Abstandsbildern nach unbewegten, Gefahr- und/oder Baustellen, insbesondere temporäre Änderungen des Fahrspurverlaufs und/oder Fahrbahnverlaufs, kennzeichnenden Gegenständen (58) als Kennzeichen gesucht wird.

5. Verfahren nach einem der vorhergehenden Ansprüche,
**dadurch gekennzeichnet,**
**dass** zur Erkennung von Gefahr- und/oder Baustellen Gegenstände (58) als Kennzeichen verwendet, die sich durch reflektierende, vorzugsweise retroreflektierende, Bereiche auf der Oberfläche auszeichnen

6. Verfahren nach einem der vorhergehenden Ansprüche,
**dadurch gekennzeichnet,**
**dass** wenigstens ein von dem Sensor (10) erfasstes Abstandsbild mit Abstandsbildpunkten (30, 30', 38) verwendet wird, die jeweils durch Aussendung eines Pulses elektromagnetischer Strahlung und Detektion des von einem Punkt oder Bereich auf einem Gegenstand (16, 56, 58) jeweils als Echopuls zurückgeworfenen Pulses sowie Erfassung wenigstens einer von der Energie des Echopulses abhängigen Echopulseigenschaft des Echopulses erhalten wurden und de nen jeweils wenigstens ein Wert für einen Parameter für die Echopulseigenschaft zugeordnet ist,
**dass** wenigstens einem Objekt Abstandsbildpunkte (30, 30', 38) des Abstandsbildes zugeordnet werden, und
**dass** dem Objekt in Abhängigkeit von wenigstens einem der Parameterwerte für die Echopulseigenschaft, die den dem Objekt zugeordneten Abstandsbildpunkten (30, 30', 38) zugeordnet sind, eine Objektklasse zugeordnet wird.

7. Verfahren nach einem der vorhergehenden Ansprüche,
**dadurch gekennzeichnet,**
**dass** Abstandsbilder mit Abstandsbildpunkten (30, 30', 38) verwendet werden, die jeweils durch Aussendung eines Pulses elektromagnetischer Strahlung und Detektion des von einem Punkt oder Bereich auf einem Gegenstand (16, 56, 58) als Echopuls zurückgeworfenen Pulses sowie Erfassung wenigstens einer von der Energie des Echopulses abhängigen Echopulseigenschaft des Echopulses erhalten wurden und denen jeweils wenigstens ein Wert für einen Parameter für die Echopulseigenschaft zugeordnet ist,
**dass** in aufeinander folgenden Zyklen jeweils in einem aktuellen Zyklus in einem aktuellen Abstandsbild nach Abstandsbildpunkten (30, 30', 38) gesucht wird, die einem aus einem vorhergehenden Zyklus bekannten Objekt entsprechen, und aus dem Objekt zugeordneten Abstandsbildpunkten (30, 30', 38) des aktuellen Abstandsbildes eine aktuelle Lage des Objekts ermittelt wird, wobei den Abstandsbildpunkten (30, 30', 38) jeweils zugeordnete Parameterwerte der Echopulseigenschaft verwendet werden.

8. Verfahren nach einem der vorhergehenden Ansprüche,
**dadurch gekennzeichnet,**
**dass** eine digitale Karte, vorzugsweise in Verbindung mit einem Positionserfassungssystem, verwendet wird, um eine zur erwartende Gestaltung und/oder eine zu erwartende Lage und/oder einen zu erwartenden Verlauf einer Fahrspur und/oder der Fahrbahn und/oder einer die Fahrbahn umfassenden Straße oder einen zu erwartenden Typ der Straße bereitzustellen.

9. Verfahren nach einem der vorhergehenden Ansprüche,
**dadurch gekennzeichnet,**
**dass** Verkehrsfunkinformationen in Bezug auf Gefahr- und/oder Baustellen verwendet werden.

10. Verfahren nach einem der vorhergehenden Ansprüche,
**dadurch gekennzeichnet,**
**dass** das Kriterium geprüft wird, ob erkannte Fahrspurmarkierungen (18, 48, 52) einen eindeutigen Verlauf von Fahrspuren (23, 23', 23", 36, 50, 54) definieren.

11. Verfahren nach einem der vorhergehenden Ansprüche,
**dadurch gekennzeichnet,**
**dass** das Kriterium geprüft wird, ob erkannte Fahrspuren (23, 23', 23", 36, 50, 54) eine durch den Typ der Straße (22) vorgegebene, Mindestbreite aufweisen.

12. Verfahren nach einem der vorhergehenden Ansprüche,
**dadurch gekennzeichnet,**
**dass** ein Krüm.mungsradius einer Fahrspur (23, 23', 23", 36, 50, 54) auf der Fahrbahn (22) oder der Fahrbahn (22) ermittelt wird, und dass das Kriterium geprüft wird, ob der ermittelte Krümmungsradius einen für den Typ der Straße (22) zulässigen Minimalradius unterschreitet.

13. Verfahren nach einem der vorhergehenden Ansprüche,
**dadurch gekennzeichnet,**
**dass** das Kriterium überprüft wird, ob ein Versatz oder eine Verjüngung wenigstens einer Fahrspur (23, 23', 23", 36, 50, 54) oder der Fahrbahn (22) erkannt wird.

14. Verfahren nach einem der vorhergehenden Ansprüche,
**dadurch gekennzeichnet,**
**dass** das Kriterium überprüft wird, ob eine erkannte Fahrspur (23, 23', 23", 36, 50, 54) endet.

15. Verfahren nach einem der vorhergehenden Ansprüche,
**dadurch gekennzeichnet,**
**dass** das Kriterium geprüft wird, ob die Position des Sensors einer zu erwartenden Position auf der Straße entspricht.

16. Verfahren nach einem der vorhergehenden Ansprüche,
**dadurch gekennzeichnet,**
**dass** das Kriterium geprüft wird, ob sich der Sensor (10) auf einer Straße befindet, die eine Fahrbahn (22) aufweist, die für Verkehr in nur einer Richtung vorgesehen ist, und ob sich der Sensor (10) auf dieser Fahrbahn (22) befindet und entgegen der vorgesehenen Fahrtrichtung bewegt.

17. Verfahren nach einem der vorhergehenden Ansprüche,
**dadurch gekennzeichnet,**
**dass** auf der Basis der Abstandsbilder eine Objektverfolgung von Gegenständen (16) wenigstens im Bereich der Fahrbahn (22) durchgeführt wird,
**dass** die Geschwindigkeit von Fahrzeugen (16) auf der Fahrbahn (22) entsprechenden Objekten ermittelt wird, und
**dass** das Kriterium geprüft wird, ob die ermittelten Geschwindigkeiten ein Geschwindtgkeitskriterium für das Vorliegen einer Gefahrund/oder Baustelle erfüllen.

18. Verfahren nach einem der vorhergehenden Ansprüche,
**dadurch gekennzeichnet,**
**dass** als Kriterium überprüft wird, ob ein Objekt erkannt wurde, das entsprechend dem ermittelten Straßentyp nicht in dem Bereich der potentiellen Gefahr- und/oder Baustelle und/oder der Fahrbahn oder dem Erfassungsbereich vorhanden sein dürfte.

19. Verfahren nach einem der vorhergehenden Ansprüche,
**dadurch gekennzeichnet,**
**dass** zusätzlich Videobilder eines Videoerfassungsbereichs verwendet werden, der sich vorzugsweise wenigstens teilweise mit dem Erfassungsbereich des Sensors für Abstandsbilder überschneidet.

20. Verfahren nach Anspruch 19,
**dadurch gekennzeichnet,**
**dass** auf der Basis wenigstens eines aktuellen Abstandsbildes ein Bereich in einem entsprechenden, aktuellen Videobild festgelegt wird, in dem nach vorgegebenen Videobildmerkmalen gesucht wird.

21. Verfahren nach Anspruch 19 oder 20,
**dadurch gekennzeichnet,**
**dass** in wenigstens einem Abstandsbild nach wenigstens einem Objekt gesucht wird, das einem Träger für ein Blinklicht entsprechen könnte, und
**dass** in einem entsprechenden Bereich eines Videobildes nach einer blinkenden Lichtquelle gesucht wird.

22. Verfahren nach einem der vorhergehenden Ansprüche,
**dadurch gekennzeichnet,**
**dass** zur Erkennung von Gefahr- und/oder Baustellen in Abhängigkeit von den Ergebnissen der Prüfung von wenigstens zwei Kriterien ein neuronales Netz verwendet wird.

23. Verfahren nach einem der vorhergehenden Ansprüche,
**dadurch gekennzeichnet,**
**dass** zur Erkennung von Gefahr- und/oder Baustellen in Abhängigkeit von den Ergebnissen der Prüfung von wenigstens zwei Kriterien eine "support vector machine" verwendet wird.

24. Computerprogramm mit Programmcode-Mitteln, um das Verfahren nach einem der Ansprüche 1 bis 23 durchzuführen, wenn das Programm auf einem Computer ausgeführt wird.

25. Computerprogrammprodukt mit Programmcode-Mitteln, die auf einem computerlesbaren Datenträger gespeichert sind, um das Verfahren nach einem der Ansprüche 1 bis 23 durchzuführen, wenn das Computerprogramm auf einem Computer ausgeführt wird.

26. Vorrichtung zur Erkennung von **gekennzeichnet**en Gefahr- und/oder Baustellen im Bereich von Fahrbahnen (22) mit mindestens einem optoelektronischen Sensor (10), vorzugsweise einem Laserscanner (10), mittels dessen Abstandsbilder eines Erfassungsbereichs (14) erfassbar sind, und mit einer mit dem optoelektronischen Sensor (10) verbundenen Datenverarbeitungseinrichtung (32), umfassend:
Mittel zum Suchen nach Kennzeichen (52, 58) für **gekennzeichnet**e Gefahr- und/oder Baustellen in den Abstandsbildern,
Mittel zum Ermitteln des Typs einer die Fahrbahn umfassenden Straße (22),
Mittel zum Prüfen, ob wenigstens ein Kriterium in Bezug auf Kennzeichen für **gekennzeichnet**e Gefahr- und/oder Baustellen erfüllt ist, wobei die Mittel dazu ausgebildet sind, zu prüfen, ob Pylone oder Baken erkannt wurden, die einen durch den ermittelten Straßentyp vorgegebenen Mindestabstand von Leitpfosten voneinander unterschreiten.

27. Vorrichtung nach Anspruch 26,
**dadurch gekennzeichnet,**
**dass** der Sensor (10) eine Sendeeinrichtung zum Aussenden eines Pulses elektromagnetischer Strahlung, eine Empfangseinrichtung zur Detektion eines von einem Punkt oder Bereich auf einem Gegenstand (18, 20, 22, 24, 26, 28) jeweils als Echopuls zurückgeworfenen Anteils des ausgesendeten Pulses, und
eine Einrichtung zur Erfassung wenigstens einer von der Energie des Echopulses abhängigen Echopulseigenschaft des Echopulses aufweist.

## Claims

1. A method for the recognition of marked hazards and/or road works in the region of carriageways (22), wherein
- spatial separation images of a detection region (14) of a sensor (10) for electromagnetic radiation, in particular a laser scanner, held at a vehicle (12) are used;
- a search is made in the spatial separation images for characteristics (52, 58) for marked hazards and/or road works;
- a type of a road (22) including the carriageway is determined; and
- a check is made whether at least one criterion with respect to characteristics for marked hazards and/or road works is satisfied,
**characterised in that**
a check is made whether pylons or landmarks were recognised which fall short of a minimum spacing of marker posts from one another specified by the determined road type.

2. A method in accordance with claim 1, **characterised in that** markings (18, 48, 52) on a carriageway (22) are recognised as characteristics on the basis of the spatial separation images.

3. A method in accordance with claim 2, **characterised in that** a search is made for lane markings (18, 48, 52) as characteristics in the spatial separation images; and **in that** the position and/or the extent and/or at least one property of the lane markings (18, 48, 52) is/are used for the recognition of the hazard and/or the road works.

4. A method in accordance with any one of the preceding claims, **characterised in that** a search is made in the spatial separation images for non-moving real objects (58) marking hazards and/or road works, in particular temporary changes in the course of a lane and/or the course of the carriageway, as characteristics.

5. A method in accordance with any one of the preceding claims, **characterised in that** real objects (58) are used as characteristics for the recognition of hazards and/or road works which are **characterised by** reflecting, preferably retro-reflecting regions on the surface.

6. A method in accordance with any one of the preceding claims, **characterised in that** at least one spatial separation image detected by the sensor (10) is used, said spatial separation image having spatial separation image elements (30, 30', 38) which were each obtained by transmission of a pulse of electromagnetic radiation and detection of the pulse in each case reflected back as an echo pulse from a point or a region on a real object (16, 56, 58) as well as by detection of at least one echo pulse property of the echo pulse dependent on the energy of the echo pulse and with which at least one respective value for a parameter for the echo pulse property is associated; **in that** spatial separation image elements (30, 30', 38) of the spatial separation image are associated with at least one object; and **in that** an object class is associated with the object in dependence on at least one of the parameter values for the echo pulse property which are associated with the spatial separation image elements (30, 30', 38) associated with the object.

7. A method in accordance with any one of the preceding claims, **characterised in that** spatial separation images having spatial separation image elements (30, 30', 38) are used which were each obtained by transmission of a pulse of electromagnetic radiation and by detection of the pulse in each case reflected back as an echo pulse from a point or a region on a real object (16, 56, 58) as well as by detection of at least one echo pulse property of the echo pulse dependent on the energy of the echo pulse and with which at least one respective value for a parameter for the echo pulse property is associated; **in that** a search is made in sequential cycles in each case in a then current cycle in a then current spatial separation image for spatial separation image elements (30, 30', 38) which correspond to an object known from a preceding cycle and a then current position of the object is determined from spatial separation image elements (30, 30', 38) of the then current spatial separation image associated with the object, with respective parameter values of the echo pulse property associated with the spatial separation image elements (30, 30', 38) being used.

8. A method in accordance with any one of the preceding claims, **characterised in that** a digital map is used, preferably in conjunction with a position detection system, to provide a design to be expected and/or a position to be expected and/or a course of a lane and/or of the carriageway and/or of a road including the carriageway to be expected or a type of road to be expected.

9. A method in accordance with any one of the preceding claims, **characterised in that** road traffic radio information with respect to hazards and/or road works is used.

10. A method in accordance with any one of the preceding claims, **characterised in that** the criterion is checked whether recognised lane markings (18, 48, 52) define a clear course of lanes (23, 23', 23", 36, 50, 54).

11. A method in accordance with any one of the preceding claims, **characterised in that** the criterion is checked whether recognised lanes (23, 23', 23", 36, 50, 54) have a minimum width specified by the type of road (22).

12. A method in accordance with any one of the preceding claims, **characterised in that** a radius of curvature of a lane (23, 23', 23", 36, 50, 54) on the carriageway (22) or of the carriageway (22) is determined; and the criterion is checked whether the determined radius of curvature falls short of a minimum radius permissible for the type of road (22).

13. A method in accordance with any one of the preceding claims, **characterised in that** the criterion is checked whether an offset or a converging of at least one lane (23, 23', 23", 36, 50, 54) or of the carriageway (22) is recognised.

14. A method in accordance with any one of the preceding claims, **characterised in that** the criterion is checked whether a recognised lane (23, 23', 23", 36, 50, 54) ends.

15. A method in accordance with any one of the preceding claims, **characterised in that** the criterion is checked whether the position of the sensor corresponds to a position on the road to be expected.

16. A method in accordance with any one of the preceding claims, **characterised in that** the criterion is checked whether the sensor (10) is located on a road which has a carriageway (22) which is provided for traffic in only one direction and whether the sensor (10) is located on this carriageway (22) and is moving against the designated direction of travel.

17. A method in accordance with any one of the preceding claims, **characterised in that** an object tracking of real objects (16) is carried out on the basis of the spatial separation images at least in the region of the carriageway (22): **in that** the speed of objects corresponding to vehicles (16) on the carriageway (22) is determined; and **in that** the criterion is checked whether the determined speeds satisfy a speed criterion for the presence of a hazard and/or road works.

18. A method in accordance with any one of the preceding claims, **characterised in that** a check is made as the criterion whether an object was recognised which, in accordance with the determined type of road, should not be present in the region of the potential hazard and/or road works and/or of the carriageway or the detection region.

19. A method in accordance with any one of the preceding claims, **characterised in that** additionally video images of a video detection region are used which preferably intersects at least partly with the detection region of the sensor for spatial separation images.

20. A method in accordance with claim 19, **characterised in that**, on the basis of at least one then current spatial separation image, a region is fixed in a corresponding then current video image in which a search is made for specified video image features.

21. A method in accordance with claim 19 or claim 20, **characterised in that** a search is made in at least one spatial separation image for at least one object which might correspond to a carrier for a flashing light; and **in that** a search is made for a flashing light source in a corresponding region of a video image.

22. A method in accordance with any one of the preceding claims, **characterised in that** a neuronal network is used for the recognition of hazards and/or road works in dependence on the results of the examination of at least two criteria.

23. A method in accordance with any one of the preceding claims, **characterised in that** a "support vector machine" is used for the recognition of hazards and/or road works in dependence on the results of the examination of at least two criteria.

24. A computer program with program code means to carry out the method in accordance with any one of the claims 1 to 23, when the program is installed on a computer.

25. A computer program product with program code means which are stored on a computer readable data carrier to carry out the method in accordance with any one of the claims 1 to 23, when the computer program product is installed on a computer.

26. An apparatus for the recognition of marked hazards and/or road works in the region of carriageways (22) having at least one optoelectronic sensor (10), preferably a laser scanner (10), by means of which its spatial separation images of a detection region (14) can be detected and having a data processing device (32) connected to the optoelectronic sensor (10), comprising:
means for searching for characteristics (52, 58) for marked hazards and/or road works in the spatial separation images; means for determining the type of a road (22) including the carriageway; means for checking whether at least one criterion is satisfied with respect to characteristics for marked hazards and/or road works, with the means being adapted to check whether pylons or landmarks were recognised which fall short of a minimum spacing of marker posts from one another specified by the determined road type.

27. An apparatus in accordance with claim 26, **characterised in that** the sensor (10) has a transmission device for the transmission of a pulse of electromagnetic radiation; a reception device for the detection of a proportion of the transmitted pulse in each case reflected as an echo pulse from a point or region on a real object (18, 20, 22, 24, 26, 28); and a device for the detection of at least one echo pulse property of the echo pulse dependent on the energy of the echo pulse.

## Revendications

1. Procédé pour la reconnaissance d'emplacements dangereux et/ou de chantiers marqués dans la zone de chaussées de circulation (22), dans lequel
- on utilise des images à séparation spatiale d'une zone de détection (14) prises par un capteur (10) monté sur un véhicule automobile (12) pour un rayonnement électromagnétique, en particulier d'un scanneur à laser,
- on recherche dans les images à séparation spatiale des marques (52, 58) qui caractérisent les emplacements dangereux et/ou des chantiers,
- on détermine un type pour la route (22) qui comprend la chaussée de circulation, et
- on vérifie si au moins un critère concernant une caractérisation pour des emplacements dangereux et/ou des chantiers marqués est satisfait,
**caractérisé en ce que** l'on vérifie si des pylônes ou des balises ont été reconnu(e)s, qui présentent entre eux/elles une distance inférieure à une distance minimum prédéterminée par le type de route déterminé entre piquets de balisage.

2. Procédé selon la revendication 1,
**caractérisé en ce que** l'on reconnaît, en se basant sur les images à séparation spatiale, des marquages (18, 48, 52) sur une chaussée de circulation (22) à titre de caractérisation.

3. Procédé selon la revendication 2,
**caractérisé en ce que** l'on recherche dans les images à séparation spatiale des marquages de voies de circulation (18, 48, 52) à titre de caractérisation, et
**en ce que** l'on utilise la situation et/ou le tracé et/ou au moins une propriété des marquages (18, 48, 52) des voies de circulation pour la reconnaissance des emplacements dangereux et/ou des chantiers.

4. Procédé selon l'une des revendications précédentes,
**caractérisé en ce que** l'on recherche dans les images à séparation spatiale à titre de caractérisation des objets immobiles (58) qui
caractérisent des emplacements dangereux et/ou des chantiers, en particulier des modifications temporaires du tracé de la voie de circulation et/ou du tracé de la chaussée de circulation.

5. Procédé selon l'une des revendications précédentes,
**caractérisé en ce que**, pour la reconnaissance d'emplacements dangereux et/ou de chantiers, on utilise à titre de caractérisation des objets (58) qui se distinguent par des zones réfléchissantes, de préférence des zones rétro-réfléchissantes, sur leur surface.

6. Procédé selon l'une des revendications précédentes,
**caractérisé en ce qu'**on utilise au moins une image à séparation spatiale saisie par le détecteur (10) avec des pixels (30, 30', 38) qui ont été obtenus respectivement par émission d'une impulsion de rayonnement électromagnétique et détection de l'impulsion renvoyée respectivement sous forme d'impulsion écho depuis un point ou une zone sur un objet (15, 56, 58) et par détermination d'au moins une propriété de l'impulsion écho qui dépend de l'énergie de l'impulsion écho et auquel est associée respectivement au moins une valeur pour un paramètre pour la propriété de l'impulsion écho,
**en ce que** des pixels (30, 30', 38) de l'image à séparation spatiale sont associés à au moins un objet, et **en ce qu'**une classe d'objet est attribuée à l'objet en fonction d'au moins une des valeurs de paramètre pour la propriété de l'impulsion écho qui sont associées aux pixels (30, 30', 38) associés à l'objet.

7. Procédé selon l'une des revendications précédentes,
**caractérisé en ce que** l'on utilise des images à séparation spatiale avec des pixels (30, 30', 38) qui ont été obtenus respectivement par émission d'une impulsion de rayonnement électromagnétique et détection de l'impulsion renvoyée respectivement sous forme d'impulsion écho depuis un point ou une zone sur un objet (16, 56, 58) et par détermination d'au moins une propriété de l'impulsion écho qui dépend de l'énergie de l'impulsion écho et auquel est associée au moins une valeur pour un paramètre pour la propriété de l'impulsion écho,
**en ce que** dans des cycles mutuellement successifs on recherche respectivement dans un cycle actuel dans une image à séparation spatiale actuelle des pixels (30, 30', 38) qui correspondent à un objet connu d'un cycle précédent, et à partir des pixels (30, 30', 38) associés à l'objet dans l'image à séparation spatiale actuelle, on détermine une situation actuelle de l'objet, et on utilise respectivement des valeurs de paramètre de la propriété de l'impulsion écho respectivement associées aux pixels (30, 30', 38) de l'image à séparation spatiale.

8. Procédé selon l'une des revendications précédentes,
**caractérisé en ce que** l'on utilise une carte numérique, de préférence en liaison avec un système de détection de position, pour proposer une configuration attendue et/ou une situation attendue et/ou un tracé attendu d'une voie de circulation et/ou de la chaussée de circulation et/ou d'une route comprenant la chaussée de circulation ou un type de route attendu.

9. Procédé selon l'une des revendications précédentes,
**caractérisé en ce que** l'on utilise des informations routières radiodiffusées qui se réfèrent à des emplacements dangereux et/ou des chantiers.

10. Procédé selon l'une des revendications précédentes,
**caractérisé en ce que** l'on vérifie le critère quant à savoir si des marquages (18, 48, 52) reconnus concernant des voies de circulation définissent un tracé univoque de voies de circulation (23, 23', 23", 36, 50, 54).

11. Procédé selon l'une des revendications précédentes,
**caractérisé en ce que** l'on vérifie le critère quant à savoir si des voies de circulation reconnues (23, 23', 23", 36, 50, 54) présentent une largeur minimum imposée par le type de route (22).

12. Procédé selon l'une des revendications précédentes,
**caractérisé en ce que** l'on détermine un rayon de courbure d'une voie de circulation (23, 23', 23", 36, 50, 54) sur la chaussée (22), et **en ce que** l'on vérifie le critère quant à savoir si le rayon de courbure déterminé passe au-dessous d'un rayon minimum admissible pour le type de route (22).

13. Procédé selon l'une des revendications précédentes,
**caractérisé en ce que** l'on vérifie le critère quant à savoir si un décalage ou un rétrécissement d'au moins une voie de circulation (23, 23', 23", 36, 50, 54) ou de la chaussée de circulation (22) est reconnu.

14. Procédé selon l'une des revendications précédentes,
**caractérisé en ce que** l'on vérifie le critère quant à savoir si une voie de circulation reconnue (23, 23', 23", 36, 50, 54) se termine.

15. Procédé selon l'une des revendications précédentes,
**caractérisé en ce que** l'on vérifie le critère quant à savoir si la position du détecteur correspond à une position attendue sur la route.

16. Procédé selon l'une des revendications précédentes,
**caractérisé en ce que** l'on vérifie le critère quant à savoir si le détecteur (10) se trouve sur une route qui comprend une voie de circulation (22) prévue pour la circulation dans un seul sens, et quant à savoir si le détecteur (10) se trouve sur cette voie de circulation (22) et se déplace en sens opposé au sens de circulation prévu.

17. Procédé selon l'une des revendications précédentes,
**caractérisé en ce que**, en se basant sur les images à séparation spatiale, on exécute une poursuite d'objet sur des objets (16) au moins dans la région de la voie de circulation (22),
**en ce que** l'on détermine la vitesse d'objets correspondant à des véhicules (16) sur la voie de circulation (22), et
**en ce que** l'on vérifie le critère quant à savoir si les vitesses déterminées satisfont un critère de vitesse pour la présence d'un emplacement dangereux et/ou d'un chantier.

18. Procédé selon l'une des revendications précédentes,
**caractérisé en ce que** l'on vérifie comme critère si un objet a été reconnu qui, en correspondance du type de route déterminé, ne devrait pas être présent dans la zone de l'emplacement dangereux potentiel et/ou du chantier et/ou de la voie de circulation ou de la zone de détection.

19. Procédé selon l'une des revendications précédentes,
**caractérisé en ce que** l'on utilise additionnellement des images vidéo d'une zone de surveillance vidéo, qui se recoupent de préférence au moins partiellement avec la zone de détection du détecteur pour les images à séparation spatiale.

20. Procédé selon la revendication 19,
**caractérisé en ce que**, en se basant sur au moins une image à séparation spatiale actuelle, on détermine une zone dans une image vidéo correspondante actuelle dans laquelle on recherche des caractéristiques d'images vidéo prédéterminées.

21. Procédé selon la revendication 19 ou 20,
**caractérisé en ce que** dans au moins une image à séparation spatiale on recherche au moins un objet qui pourrait correspondre à un support pour un feu clignotant, et **en ce que** l'on recherche une source lumineuse clignotante dans une zone correspondante d'une image vidéo.

22. Procédé selon l'une des revendications précédentes,
**caractérisé en ce que** pour la reconnaissance d'emplacements dangereux et/ou de chantiers on utilise un réseau neuronal en fonction des résultats de la vérification d'au moins deux critères.

23. Procédé selon l'une des revendications précédentes,
**caractérisé en ce que** pour la reconnaissance d'emplacements dangereux et/ou de chantiers en utilisent une machine à support vectoriel ("support vector machine") en fonction des résultats de la vérification d'au moins deux critères.

24. Programme d'ordinateur comprenant des moyens formant code de programme pour mettre en oeuvre le procédé selon l'une des revendications 1 à 23 quand le programme est exécuté sur un ordinateur.

25. Produit de programme d'ordinateur comprenant des moyens formant code de programme qui sont mémorisés sur un support de données lisible à l'ordinateur, pour mettre en oeuvre le procédé selon l'une des revendications 1 à 23 quand le programme d'ordinateur est exécuté sur un ordinateur.

26. Dispositif pour la reconnaissance d'emplacements dangereux et/ou de chantiers marqués dans la zone de voies de circulation (22), comprenant au moins un capteur optoélectronique (10), de préférence un scanneur à laser (10), au moyen duquel des images à séparation spatiale d'une zone de détection (14) peuvent être saisies, et comprenant un système de traitement de données (32) connecté au capteur optoélectronique (10), comprenant :
des moyens pour chercher des caractéristiques (52, 58) pour des emplacements dangereux et/ou des chantiers marqués dans les images à séparation spatiale,
des moyens pour déterminer le type d'une route (22) qui comprend la voie de circulation,
des moyens pour vérifier si au moins un critère concernant la caractérisation d'emplacements dangereux et/ou de chantiers marqués est satisfait, lesdits moyens étant réalisés en vue de vérifier si des pylônes ou des balises ont été reconnu(e)s, qui présentent entre eux/elles une distance inférieure à une distance minimum prédéterminée par le type de route déterminé entre piquets de balisage.

27. Dispositif selon la revendication 26,
**caractérisé en ce que** le capteur (10) comprend une unité émettrice pour émettre une impulsion de rayonnement électromagnétique, une unité réceptrice pour détecter une part de l'impulsion émise renvoyée respectivement sous forme d'impulsion écho depuis un point ou une zone sur un objet (18, 20, 22, 24, 26, 28), et
des moyens pour détecter au moins une propriété de l'impulsion écho qui dépend de l'énergie de l'impulsion écho.
